(19) Europäisches Patentamt / European Patent Office / Office européen des brevets

(11) EP 4 718 793 A1

(12) EUROPEAN PATENT APPLICATION
published in accordance with Art. 153(4) EPC

(43) Date of publication:
01.04.2026 Bulletin 2026/14

(21) Application number: 24850529.9

(22) Date of filing: 27.03.2024

(51) International Patent Classification (IPC):
H04L 25/49 $^{(2006.01)}$    H04B 10/524 $^{(2013.01)}$

(52) Cooperative Patent Classification (CPC):
H04B 5/77; H04B 10/524; H04L 25/49

(86) International application number:
PCT/CN2024/083968

(87) International publication number:
WO 2025/030871 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.08.2023 CN 202310986448

(71) Applicant: ZTE Corporation
Shenzhen, Guangdong 518057 (CN)

(72) Inventors:
• YANG, Xiaoling
  Shenzhen, Guangdong 518057 (CN)
• XU, Jin
  Shenzhen, Guangdong 518057 (CN)
• DAI, Bo
  Shenzhen, Guangdong 518057 (CN)
• LIANG, Chulong
  Shenzhen, Guangdong 518057 (CN)
• YU, Guanghui
  Shenzhen, Guangdong 518057 (CN)

(74) Representative: Aipex B.V.
Vestdijk 51
5611 CA Eindhoven (NL)

(54) **INFORMATION SENDING METHOD, INFORMATION RECEIVING METHOD, TRANSMISSION NODE AND STORAGE MEDIUM**

(57) Provided are an information sending method, an information receiving method, a transmission node, and a storage medium. The method includes determining the signal length of a signal, where the signal represents a k-bit information sequence, k is an integer greater than or equal to 2, and k is a preset value or a value configured using signaling; determining the signal, where the signal includes a high-level pulse and a low-level pulse, and different pulse combination modes of the signal correspond to different k-bit information sequences; and transmitting the signal carrying the information sequence.

Determine the signal length of the signal, where the signal represents a k-bit information sequence, k is an integer greater than or equal to 2, and k is a preset value or a value configured using signaling ⟩ 110

Determine the signal, where the signal includes a high-level pulse and a low-level pulse, and different pulse combination modes of the signal correspond to different k-bit information sequences ⟩ 120

Transmit the signal carrying the information sequence ⟩ 130

**FIG. 2**

**Description**

TECHNICAL FIELD

The present application relates to the field of communication technology, for example, an information sending method, an information receiving method, a transmission node, and a storage medium.

BACKGROUND

In radio-frequency identification (RFID), pulse interval encoding (PIE) applied to a reader-to-tag link is a simple single-bit information transmission method that can adapt to the features of a passive tag, such as charging requirements, power consumption constraints, and low clock precision. A passive tag can perform bit decision according to the width of a received high-level pulse. This pulse-width-based decision is relatively simple to implement and does not require a high-precision clock. However, PIE-based information transmission has a single transmission form and a low transmission rate, making it difficult to satisfy the communication requirements of the next-generation Internet of Things (IoT).

SUMMARY

The present application provides an information sending method, an information receiving method, a transmission node, and a storage medium.

Embodiments of the present application provide an information sending method.

The method includes determining the signal length of a signal, where the signal represents a k-bit information sequence, k is an integer greater than or equal to 2, and k is a preset value or a value configured using signaling; determining the signal, where the signal includes a high-level pulse and a low-level pulse, and different pulse combination modes of the signal correspond to different k-bit information sequences; and transmitting the signal carrying the information sequence.

Embodiments of the present application provide an information receiving method.

The method includes receiving a signal carrying an information sequence; determining the signal length of the signal, where the signal represents a k-bit information sequence, k is an integer greater than or equal to 2, and k is a preset value or a value configured using signaling; and determining the information sequence carried by the signal according to a correspondence between the signal length of the signal, different pulse combination modes, and different k-bit information sequences.

Embodiments of the present application also provide a transmission node. The transmission node includes a memory, a processor, and a computer program stored in the memory and executable on the processor, where when executing the program, the processor performs the information sending method or the information receiving method.

Embodiments of the present application also provide a computer-readable storage medium storing a computer program which, when executed by a processor, causes the processor to perform the information sending method or the information receiving method.

BRIEF DESCRIPTION OF DRAWINGS

FIG. 1 is a diagram of information transmission using PIE according to an embodiment.

FIG. 2 is a flowchart of an information sending method according to an embodiment.

FIG. 3 is a flowchart of an information receiving method according to an embodiment.

FIG. 4 is a diagram of a k-bit information sequence with k = 2 according to an embodiment.

FIG. 5 is a diagram of a k-bit information sequence with k = 2 according to an embodiment.

FIG. 6 is a diagram of a k-bit information sequence with k = 2 according to an embodiment.

FIG. 7 is a diagram of a k-bit information sequence with k = 4 according to an embodiment.

FIG. 8 is a diagram of a k-bit information sequence with k = 2 according to an embodiment.

FIG. 9 is a diagram of a k-bit information sequence with k = 2 according to an embodiment.

FIG. 10 is a diagram of a k-bit information sequence with k = 2 according to an embodiment.

FIG. 11 is a diagram of a k-bit information sequence with k = 2 according to an embodiment.

FIG. 12 is a diagram of a k-bit information sequence with k = 3 according to an embodiment.

FIG. 13 is a diagram of a k-bit information sequence with k = 2 according to an embodiment.

FIG. 14 is a diagram of a k-bit information sequence with k = 2 according to an embodiment.

FIG. 15 is a diagram of a k-bit information sequence with k = 2 according to an embodiment.

FIG. 16 is a diagram of a k-bit information sequence with k = 2 according to an embodiment.

FIG. 17 is a diagram of a k-bit information sequence with k = 2 according to an embodiment.

FIG. 18 is a diagram illustrating the structure of an information sending apparatus according to an embodiment.

FIG. 19 is a diagram illustrating the structure of an information receiving apparatus according to an embodiment.

FIG. 20 is a diagram illustrating the hardware structure of a transmission node according to an embodiment.

DETAILED DESCRIPTION

The present application is described hereinafter in conjunction with the drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

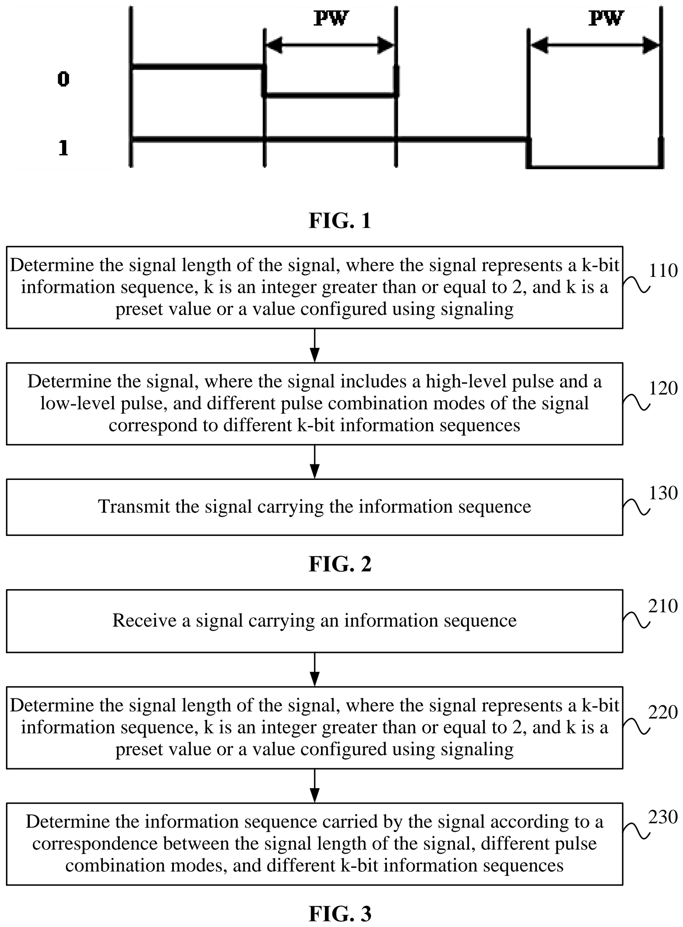

Radio-frequency identification (RFID) is a key technology for enabling automatic identification in an Internet of Things (IoT) communication system. In passive RFID, in view of the constraints of energy harvesting, low-power reception requirements, and low clock precision of a passive tag, a reader-to-tag link uses a pulse interval encoding (PIE) scheme for data transmission, as shown in FIG. 1. In this scheme, the transmission signal corresponding to bit 0 includes high-level pulses and low-level pulses of equal width, with the width of a low-level pulse being defined as pulse width (PW). The transmission signal corresponding to bit 1 includes high-level pulses and low-level pulses of unequal widths, with the width of a low-level pulse being defined as PW and the width of a high-level pulse being defined as 1.5 PW to 2 PW. By using the different high-level pulse widths in the transmission signals of bit 0 and bit 1, the passive tag can determine the bit value according to the received high-level pulse width. This width-based bit decision is simple to implement and does not require high clock precision. In addition, since both bit 0 and bit 1 transmission signals include high-level pulses, the reader's RF signal can maintain a certain transmission power level, ensuring that the passive tag can be powered while data is transmitted.

However, the PIE transmission method suffers from limited coverage and a relatively low transmission rate, making it difficult to satisfy the communication requirements of the next-generation IoT. To address this, the present application proposes a multi-bit information transmission (including multi-bit information sending and receiving) method, thereby improving the transmission performance of the reader-to-tag link without significantly increasing the receiving power consumption of the passive tag.

FIG. 2 is a flowchart of an information sending method according to an embodiment. This method may be applied to a transmission node, mainly a sending node. As shown in FIG. 2, the method of this embodiment includes step 110, step 120, and step 130.

In step 110, the signal length of the signal is determined, where the signal represents a k-bit information sequence, k is an integer greater than or equal to 2, and k is a preset value or a value configured using signaling.

In step 120, the signal is determined, where the signal includes a high-level pulse and a low-level pulse, and different pulse combination modes of the signal correspond to different k-bit information sequences.

In step 130, the signal carrying the information sequence is transmitted.

In this embodiment, a sending node sends the signal carrying the information sequence, and a receiving node receives the signal carrying the information sequence. The signal carrying the information sequence is transmitted by using high-level pulses and low-level pulses, thereby enabling multi-bit information transmission and improving the coverage range and transmission rate of information encoding.

In an embodiment, the signal satisfies at least one of the following:

the signal length of the signal is the duration of the signal;

the pulse width of the high-level pulse in the signal is the duration of the high-level pulse, and the pulse width of the low-level pulse in the signal is the duration of the low-level pulse; or

the high-level pulse and the low-level pulse in the signal correspond to at least one modulation symbol having the same length but different amplitude values, where different amplitudes of the at least one modulation symbol are represented by the high-level pulse and the low-level pulse, or presence and absence of data transmission of the at least one modulation symbol are represented by the high-level pulse and the low-level pulse. The modulation symbol may be, for example, an on-off keying (OOK) modulation symbol, an amplitude-shift keying (ASK) modulation symbol, or an orthogonal frequency-division multiplexing (OFDM) modulation symbol. The length of the modulation symbol is the duration of the symbol.

In an embodiment, the signal satisfies at least one of the following:

different signal lengths correspond to different combinations of the information sequence; and signals having different signal lengths are different in high-level pulse width and the same in low-level pulse width; or signals having different signal lengths are different in high-level pulse width and different in low-level pulse width;

different pulse width combinations of at least one of the high-level pulse or the low-level pulse in the signal correspond to different combinations of the information sequence;

the information sequence corresponds to $2^k$ sequence states divided into multiple groups; different groups correspond to different signal lengths; for the same group, information sequences corresponding to different sequence states correspond to the same signal length and correspond to different pulse width combinations of the high-level pulse and the low-level pulse; by way of example, a k-bit information sequence corresponds to $2^k$ sequence states divided into s groups: S1, S2, ..., Ss; the group Si includes xi sequence states: $\sum_{i=1}^{s} x_i = 2^k$; for the group Si, information sequences corresponding to xi different sequence states correspond to the same signal length Ti; for the group Si, there are different pulse width combinations of the high-level pulse and the low-level pulse, where the different pulse width combinations correspond to the information sequences corresponding to the xi different sequence states in the group Si; and different groups correspond to different signal lengths Ti;

different pulse widths of at least one of the high-level pulse or the low-level pulse in the signal correspond to different bit values;

different pulse width ratios between two consecutive high-level pulses in the signal correspond to different bit values, where the two consecutive high-level pulses refer to two high-level pulses adjacent to the same low-level pulse, one preceding and the other following the low-level pulse;

different pulse width ratios between two consecutive low-level pulses in the signal correspond to different bit values, where the two consecutive low-level pulses refer to two low-level pulses adjacent to the same high-level pulse, one preceding and the other following the high-level pulse;

different pulse width ratios between two consecutive pulses consisting of one high-level pulse and one low-level pulse in the signal correspond to different bit values; or

different unit pulse combinations of the signal correspond to different combinations of the information sequence.

In an embodiment, the information sequence corresponds to $2^k$ sequence states divided into $2^m$ groups. Each group includes $2^{k-m}$ sequence states. Sequence states in each group are identified by m bits in the k-bit information sequence. Different groups correspond to different signal lengths. Information sequences corresponding to different sequence states in the same group are each identified by a subsequence composed of the remaining (k - m) bits in the k-bit information sequence. The information sequences corresponding to the different sequence states in the same group correspond to the same signal length. For the same group, there are different pulse width combinations of the high-level pulse and the low-level pulse that correspond to information sequences corresponding to $2^{k-m}$ sequence states of the group. m is a positive integer less than k.

In an embodiment, the signal length of the signal is determined according to at least one of the following: k, a basic pulse width, the maximum pulse width, the information sequence, or a preset length.

The preset length is determined according to at least one of k or the basic pulse width.

In an embodiment, the signal includes M high-level pulses and N low-level pulses. M = N, or M > N.

The value of M is a positive integer or is determined according to k or is determined according to the information sequence.

The value of N is a positive integer or is determined according to k or is determined according to the information sequence.

In an embodiment, the width of a pulse in the signal satisfies at least one of the following:

the width of the pulse in the signal is determined by a basic pulse width;

the width of the pulse in the signal is determined by the information sequence;

the width of the pulse in the signal is determined by the signal length of the signal;

the width of the pulse in the signal is determined by the signal length of the signal and a scale factor, where the scale factor is a positive real number less than 1 and is determined by the information sequence; by way of example, the width of the i-th high-level pulse and/or the n-th low-level pulse in the signal is determined by the signal length T of the signal and the scale factor a, where $0 < a \leq 1$, and the scale factor a is determined by the information sequence;

the width of at least one of the i-th high-level pulse or the n-th low-level pulse in the signal is determined by the value of the j-th bit in the information sequence, where $0 \leq i < M$, $0 \leq n < N$, $0 \leq j < k$, i is a function of j, and n is a function of j; or

the width of the 0-th high-level pulse and the width of the (M - 1)-th high-level pulse in the signal are determined by the maximum pulse width.

M denotes the number of high-level pulses. N denotes the number of low-level pulses.

In an embodiment, the value of the width of the high-level pulse in the signal or the value of the width of the low-level pulse in the signal is taken from a first preset set. The first preset set includes at least two unequal elements.

All elements in the first preset set are less than the maximum pulse width. By way of example, the value of the width of the high-level pulse and/or the low-level pulse in the signal is taken from a preset set S. The set S includes at least two elements PW1 and PW2. PW1 ≠ PW2. All elements in the set S are less than the maximum pulse width PWm.

In an embodiment, the scale factor is taken from a second preset set. The second preset set includes at least two unequal elements. Each element in the second preset set is a positive real number less than 1. By way of example, the scale factor is taken from a preset set A. The set A includes at least two elements a1 and a2. a1 ≠ a 2. 0 < a1. a2 < 1.

In an embodiment, the signal includes P unit pulses. P is an integer multiple of k.

The width of each of the P unit pulses is determined by at least one of the following parameters: a preset width, a basic pulse width, or a parameter configured using signaling.

In an embodiment, each of the P unit pulses is a unit high-level pulse or a unit low-level pulse and is determined by the k-bit information sequence.

In an embodiment, the multi-bit information transmission method may be used in combination with other existing encoding methods.

In an embodiment, the information sequence is obtained from mapping of a k1-bit sequence. k is a positive integer greater than or equal to 2. k1 is a positive integer less than k.

In an embodiment, a mapping relationship between the information sequence and the k1-bit sequence satisfies at least one of the following mapping modes:

mapping the k1-bit sequence to the k-bit information sequence according to a preset mapping sequence;

mapping the k1-bit sequence to the information sequence according to a preset encoding rule; or

dividing the k1-bit sequence into multiple groups and mapping each group according to a preset mapping sequence or a preset encoding rule, where the total length of mapped sequences in the multiple groups is k bits, and the multiple groups use the same preset mapping sequence or encoding rule or use different preset mapping sequences or encoding rules. By way of example, every r1 bits in the k1-bit sequence are mapped to an r-bit sequence according to a preset mapping sequence or a preset encoding rule. r1 is a positive integer less than k1 and divides k1. r is a positive integer less than k and divides k. k/r = k1/r1.

In an embodiment, the mapping relationship between the information sequence and the k1-bit sequence satisfies multiple superpositions of at least one of the mapping modes.

In an embodiment, different superpositions use different mapping modes or use the same mapping mode but different mapping sequences, different encoding rules, or different grouped mappings.

In an embodiment, the information sequence is mapped to a k2-bit sequence, and the signal is constructed based on the k2-bit sequence and is composed of the high-level pulse and the low-level pulse. k2 is a positive integer greater than k. By way of example, the k-bit information sequence is mapped to a k2-bit sequence, and then the signal composed of high-level and low-level pulses is constructed based on the k2-bit sequence. k is a positive integer greater than or equal to 2. k2 is a positive integer greater than k.

In an embodiment, a mapping relationship between the information sequence and the k2-bit sequence satisfies at least one of the following mapping modes:

mapping the k-bit information sequence to the k2-bit sequence according to a preset mapping sequence;

mapping the k-bit information sequence to the k2-bit sequence according to a preset encoding rule; or

dividing the k-bit sequence into multiple groups and mapping each group according to a preset mapping sequence or a preset encoding rule, where the total length of mapped sequences in the multiple groups is k1 bits, and the multiple groups use the same preset mapping sequence or encoding rule or use different preset mapping sequences or encoding rules. By way of example, every r bits of the k-bit sequence are mapped to an r2-bit sequence according to a preset mapping sequence or a preset encoding rule. r2 is a positive integer less than k2 and divides k2. r is a positive integer less than k and divides k. k/r = k2/r2.

In an embodiment, the mapping relationship between the information sequence and the k2-bit sequence satisfies multiple superpositions of at least one of the mapping modes.

In an embodiment, different superpositions use different mapping modes or use the same mapping mode but different mapping sequences, different encoding rules, or different grouped mappings.

Embodiments of the present application also provide an information receiving method. FIG. 3 is a flowchart of an information receiving method according to an embodiment. This method may be applied to a receiving node, mainly a receiving node. As shown in FIG. 3, the method of this embodiment includes step 210, step 220, and step 230.

In step 210, a signal carrying an information sequence is received.

In step 220, the signal length of the signal is determined, where the signal represents a k-bit information sequence, k is an integer greater than or equal to 2, and k is a preset value or a value configured using signaling.

In step 230, the information sequence carried by the signal is determined according to a correspondence between the signal length of the signal, different pulse combination modes, and different k-bit information sequences.

In this embodiment, the receiving node receives the signal carrying the information sequence, and the sending node transmits the signal carrying the information sequence by using high-level and low-level pulses, thereby enabling multi-bit information transmission. The receiving node can reversely derive the information sequence carried by the signal according to the signal length of the signal, the high-level and low-level pulses in the signal, and the correspondence between the pulse combination mode and k-bit information sequence, thereby enabling signal transmission and improving the coverage range and transmission rate of information encoding.

In this embodiment, the correspondence between the signal length of the signal, different pulse combination modes, and different k-bit information sequences includes at least one of the following:

different signal lengths correspond to different k-bit information sequences;

different pulse width combinations of at least one of the high-level pulse or the low-level pulse in the signal correspond to different combinations of the k-bit information sequence;

the information sequence corresponds to $2^k$ sequence states divided into multiple groups, different signal lengths correspond to different groups, and different pulse width combinations of at least one of the high-level pulse or the low-level pulse in the signal having the same signal length correspond to information sequences corresponding to different sequence states in the same group;

different pulse widths of at least one of the high-level pulse or the low-level pulse in the signal correspond to different bit values;

different pulse width ratios between two consecutive high-level pulses in the signal correspond to different bit values;

different pulse width ratios between two consecutive low-level pulses in the signal correspond to different bit values;

different pulse width ratios between two consecutive pulses consisting of one high-level pulse and one low-level pulse in the signal correspond to different bit values; or

different unit pulse combinations of the signal correspond to different combinations of the information sequence.

In an embodiment, the information sequence corresponds to $2^k$ sequence states divided into $2^m$ groups. Each group includes $2^{k-m}$ sequence states. Different signal lengths correspond to different groups of information sequences, that is, correspond to different values of m bits in different information sequences. Different pulse width combinations of at least one of the high-level pulse or the low-level pulse in the signal having the same signal length correspond to information sequences corresponding to different sequence states in the same group, that is, correspond to different values of the remaining (k - m) bits in the information sequence. m is a positive integer less than k.

In an embodiment, the information sequence is obtained from mapping of a bit sequence according to a mapping relationship that satisfies at least one of the following mapping modes:

a preset mapping sequence;

a preset encoding rule;

a preset grouped mapping, where the information sequence is divided into multiple groups, and the multiple groups use the same preset mapping sequence or encoding rule or use different preset mapping sequences or encoding rules; or

multiple superpositions of a preset mapping sequence and/or a preset encoding rule and/or a preset grouped mapping, where different superpositions use different mapping sequences and/or different encoding rules and/or different grouped mappings.

The following describes the information sending method and the information receiving method in conjunction with embodiments by way of example.

Embodiment one

This embodiment provides an example of a multi-bit information sending and receiving method. In this embodiment, the multi-bit information transmission method includes that one or more first transmission nodes send a signal composed of high-level and low-level pulses to one or more second transmission nodes, and one or more second transmission nodes receive the signal composed of high-level and low-level pulses sent by the one or more first transmission nodes. The signal represents a k-bit information sequence. k is a positive integer greater than or equal to 2. Further, the length k of the information sequence is determined in at least one of the following manners: preset or configured using signaling.

The signal composed of high-level and low-level pulses has at least one of the following features: the pulse width of a high-level pulse in the signal is the duration of the high-level pulse, and the pulse width of a low-level pulse in the signal is the duration of the low-level pulse; or

One or more modulation symbols having the same length but different amplitude values, such as OOK modulation symbols, ASK modulation symbols, and OFDM modulation symbols, are represented by the high-level pulse and the low-level pulse in the signal. The length of each modulation symbol is its duration. Further, different amplitudes of the modulation symbol are represented by the high-level pulse and the low-level pulse, or presence and absence of data transmission of the modulation symbol are represented by the high-level pulse and the low-level pulse.

Further, in this embodiment, the signal composed of high-level and low-level pulses represents the k-bit information sequence in the following manner: The signal has different lengths T to represent different combinations of the k-bit information sequence. Additionally, in the signals having different signal lengths, the high-level pulse widths differ while the low-level pulse widths are the same.

Further, in this embodiment, the signal length T of the signal composed of high-level and low-level pulses is determined by the length k of the information sequence, the basic pulse width PW, and the k-bit information sequence $\{b_i\}$ = $\{b_{k-1}, b_{k-2}, ..., b_1, b_0\}$ $(0 \le i < k)$.

Further, the signal includes M = 1 high-level pulse and N = 1 low-level pulse. The width of the high-level pulse and/or the low-level pulse is determined by the signal length T of the signal.

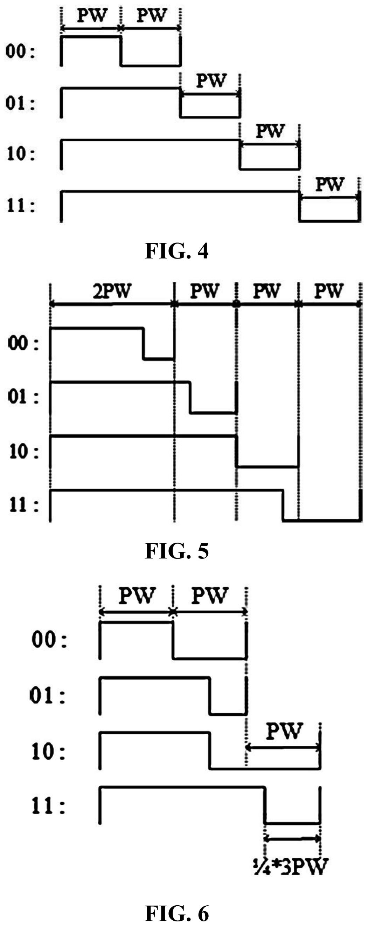

In an example, the signal length T of the signal composed of high-level and low-level pulses is determined by the length k of the information sequence, the basic pulse width PW, and the k-bit information sequence $\{b_i\}$ = $\{b_{k-1}, b_{k-2}, ..., b_1, b_0\}$ $(0 \le i < k)$ and is expressed as $T = PW * (2 + \sum_{i=0}^{k-1} 2^i b_i)$. Further, the width of the high-level pulse in the signal is determined by the signal length T of the signal so that the width $W^H$ of the high-level pulse in the signal can be expressed as $W^H = T - PW$. The width of the low-level pulse in the signal is the basic pulse width PW. FIG. 4 is a diagram of a k-bit information sequence with k = 2 according to an embodiment.

Embodiment two

In this embodiment, the signal composed of high-level and low-level pulses represents the k-bit information sequence in the following manner: The signal has different lengths T to represent different combinations of the k-bit information sequence. Additionally, in the signals having different signal lengths, the high-level pulse widths differ and the low-level pulse widths differ.

Further, in this embodiment, the signal length T of the signal composed of high-level and low-level pulses is determined by the length k of the information sequence, the basic pulse width PW, and the k-bit information sequence $\{b_i\}$ = $\{b_{k-1}, b_{k-2}, ..., b_1, b_0\}$ $(0 \le i < k)$.

Further, the signal includes M = 1 high-level pulse and N = 1 low-level pulse. The width of the high-level pulse and/or the low-level pulse is determined by the signal length T of the signal and a scale factor a. $0 < a \le 1$. The scale factor a is determined by the information sequence. Further, the scale factor is taken from a preset set A (a second preset set). The set A includes at least two elements a1 and a2. a1 $\ne$ a 2. 0 < a1. a2 $\le$ 1.

In an example, the signal length T of the signal composed of high-level and low-level pulses is determined by the length k of the information sequence, the basic pulse width PW, and the k-bit information sequence $\{b_i\}$ = $\{b_{k-1}, b_{k-2}, ..., b_1, b_0\}$ $(0 \le i < k)$ and is expressed as $T = PW * (2 + \sum_{i=0}^{k-1} 2^i b_i)$. Further, the widths of the high-level and low-level pulses in the signal are determined by the signal length T of the signal and the scale factor a, where the scale factor is taken from the preset set A, so that the width $W^H$ of the high-level pulse in the signal can be expressed as $W^H = aT$. The width $W^L$ of the low-level pulse in the signal can be expressed as $W^L = (1 - a)T$. FIG. 5 is a diagram of a k-bit information sequence with k = 2 according to an embodiment. The value of the scale factor a is 3/4.

Embodiment three

In this embodiment, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by m bits in the k-bit information sequence. s = $2^m$. That is, different groups are formed according to different combinations of the subsequence composed of m bits in the k-bit information sequence. Sequences corresponding to different sequence states in the same group may be identified by different combinations of the subsequence composed of the remaining (k - m) bits of the k bits. xi = $2^{k-m}$.

Further, in this embodiment, the signal length T of the signal composed of high-level and low-level pulses is determined by the length k of the information sequence, the basic pulse width PW, and the k-bit information sequence $\{b_i\}$ = $\{b_{k-1}, b_{k-2}, ..., b_1, b_0\}$ $(0 \le i < k)$; or the signal length T of the signal composed of high-level and low-level pulses is determined by a preset length L.

Further, the signal includes M = 1 high-level pulse and N = 1 low-level pulse. The width of the high-level pulse and/or the low-level pulse is determined by the signal length T of the signal and a scale factor a. $0 < a \le 1$. The scale factor a is determined by the information sequence. The value of the scale factor a is taken from a preset set A (a second preset set).

In an example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, different signal lengths Ti corresponding to different groups Si are determined by a preset length Li. The different signal lengths Ti include L1, ..., Ls. Further, signals corresponding to the group Si have the same length Ti but different high-level and low-level pulse width combinations. The width $PW^H$ of the high-level pulse and the width $PW^L$ of the low-level pulse in the signal are determined by the signal length Ti and the scale factor a. $PW^H = aTi$. $PW^L = (1 - a)Ti$. $0 < a < 1$. The scale factor a is determined by the information sequence. The value of the scale factor a is taken from the preset set A. The set A is at least $A = \{a1, a2, ..., aq\}$. $q = \max(xi)$. When $i \neq j$, $ai \neq aj$.

In an example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by (k - 1) bits in the k-bit information sequence. $s = 2^{k-1}$. That is, different groups are formed according to different combinations of subsequences composed of (k - 1) bits in the k-bit information sequence. Sequences corresponding to different sequence states in the same group may be identified by different values of the remaining 1 bit of the k bits. $xi = 2^1$. Further, the signal length T of the signal composed of high-level and low-level pulses is determined by the length k of the information sequence, the basic pulse width PW, and the k-bit information sequence $\{b_i\} = \{b_{k-1}, b_{k-2}, ..., b_1, b_0\}$ ($0 \leq i < k$) and is expressed as $T = PW*(2 + \sum_{i=1}^{k-1} 2^{i-1} b_i)$.

Further, the preset set A is $A = \{a_1, a_2\}$. The width of the high-level pulse in the signal is determined by the length T of the signal and the scale factor $a_i \in A(i = 1, 2)$. Further, the scale factor $a_i$ is determined by the (k - 1)-th bit in the k-bit information sequence, that is, the bit $b_0$: When the value of the bit $b_0$ is 1, the scale factor is a1 (or a2) so that the width $W^H$ of the high-level pulse in the signal can be expressed as $W^H = a_1 T$ (or $W^H = a_2 T$); and when the value of the bit $b_0$ is 0, the scale factor is a2 (or a1) so that the width $W^H$ of the high-level pulse in the signal can be expressed as $W^H = a_2 T$ (or $W^H = a_1 T$). The width $W^L$ of the low-level pulse in the signal is determined by the length T of the signal and the scale factor a and can be expressed as $W^L = T - W^H = (1 - a_i)T$, (i = 1, 2).

FIG. 6 is a diagram of a k-bit information sequence with k = 2 according to an embodiment. The preset set A is $A = \{a_1 = 1/2, a_2 = 3/4\}$. When the bit $b_0$ in the information sequence is 0, the width of the high-level pulse in the signal is determined by the length T of the signal and the scale factor a1, that is, $W^H = a_1 T$, and the width of the low-level pulse in the signal is determined by the length T of the signal and the scale factor a1, that is, $W^L = T - W^H = (1 - a_1)T$. When the bit $b_0$ in the information sequence is 1, the width of the high-level pulse and the width of the low-level pulse in the signal are determined by the length T of the signal and the scale factor a2, that is, $W^H = a_2 T$, $W^L = (1 - a_2)T$.

In another example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by m bits in the k-bit information sequence. $s = 2^m$. That is, different groups are formed according to different combinations of subsequence composed of m bits in the k-bit information sequence. Sequences corresponding to different sequence states in the same group may be identified by different combinations of subsequence composed of the remaining (k - m) bits of the k bits. $xi = 2^{k-m}$. Further, the widths of the high-level and low-level pulses in the signal are determined by the signal length T of the signal and the scale factor a. $0 < a < 1$. The scale factor a is determined by the information sequence. The value of the scale factor a is taken from the preset set A. Further, the preset set A is $A = \{a_1, a_2, ..., a_{2k-m}\}$. The scale factor a which is taken from the preset set A is determined by the remaining (k - m) bits in the k-bit information sequence: When the decimal value of the (k - m) bits is d, the scale factor a is $a_{d+1}$ ($0 \leq d < 2^{k-m}$) so that the width $W^H$ of the high-level pulse in the signal is $W^H = a_{d+1}T$, and the width $W^L$ of the low-level pulse in the signal is $W^L = T - W^H = (1 - a_{d+1})T$.

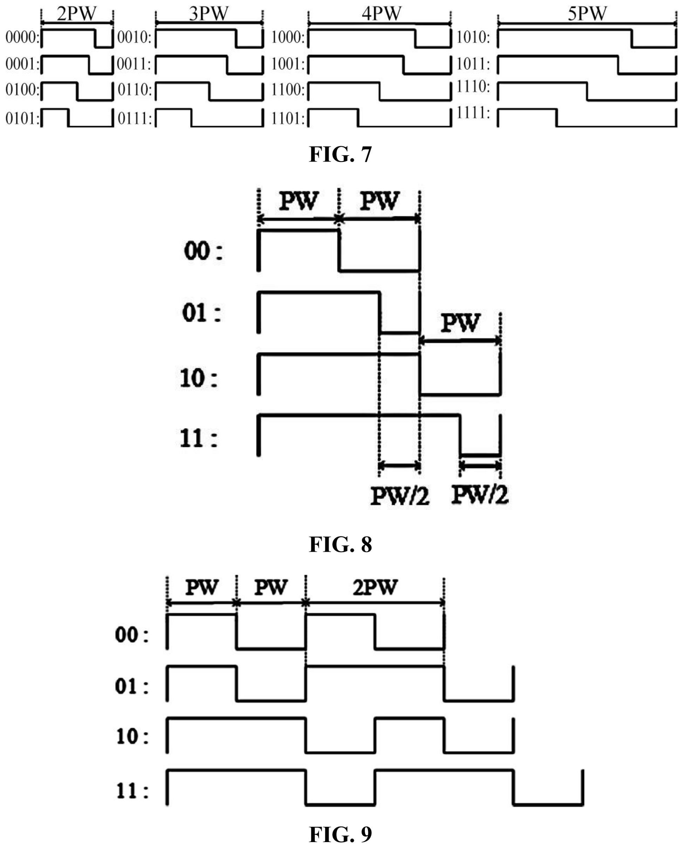

FIG. 7 is a diagram of a k-bit information sequence with k = 4 according to an embodiment. The information sequence with k = 4 is $\{b_i\} = \{b_3, b_2, b_1, b_0\}$. In the information sequence with k = 4, m = 2 bits. The length T of the signal is determined by $\{b_{ij}\} = \{b_3, b_1\}$, the length k of the information sequence, and the basic pulse width PW. $T = PW*(2 + 2^1 b_3 + 2^0 b_1)$. Further, the preset set A includes at least four elements. $A = \{a1 = 3/4, a2 = 2/3, a3 = 1/2, a4 = 1/3\}$. The widths of the high-level and low-level pulses in the signal are determined by the signal length T of the signal and the scale factor a. The width $W^H$ of the high-level pulse in the signal is $W^H = aT$. The width $W^L$ of the low-level pulse in the signal is $W^L = (1 - a)T$. Further, the scale factor a is determined by the remaining (k - m) = 2 bits $\{b_2, b_0\}$ in the k-bit information sequence, and the value of the scale factor a is taken from the set A, so that when the value of $\{b_2, b_0\}$ is $\{0, 0\}$, the value of the scale factor a is a1 = 3/4; when the value of $\{b_2, b_0\}$ is {0, 1}, the value of the scale factor a is a2 = 2/3; when the value of $\{b_2, b_0\}$ is {1, 0}, the value of the scale factor a is a3 = 1/2; and when the value of $\{b_2, b_0\}$ is {1, 1}, the value of the scale factor a is a4=1/3.

Embodiment four

In this embodiment, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by m bits in the k-bit information sequence. $s = 2^m$. That is, different groups are formed according to different combinations of subsequence composed of m bits in the k-bit information sequence. Sequences corresponding to different sequence states in the same group may be identified by different combinations of subsequence composed of the remaining (k - m) bits of the k bits. $xi = 2^{k-m}$.

Further, in this embodiment, the signal length T of the signal composed of high-level and low-level pulses is determined by the length k of the information sequence, the basic pulse width PW, and the k-bit information sequence $\{b_i\} = \{b_{k-1}, b_{k-2}, ..., b_1, b_0\}$ ($0 \leq i < k$); or the signal length T of the signal composed of high-level and low-level pulses is determined by a preset length L.

Further, the signal includes M = 1 high-level pulse and N = 1 low-level pulse. The width of the high-level pulse and/or the low-level pulse is determined by the k-bit information sequence. Further, the value of the width of the high-level pulse and/or the value of the width of the low-level pulse in the signal is taken from a preset set S (a first preset set). The set S includes at least two elements PW1 and PW2. PW1 ≠ PW2. All elements in the set S are less than the maximum pulse width PWm.

In an example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, different signal lengths Ti corresponding to different groups Si are determined by a preset length Li. The different signal lengths Ti include L1, ..., Ls. Further, signals corresponding to the group Si have the same length Ti but different high-level and low-level pulse width combinations. The width $PW^H$ of the high-level pulse and the width $PW^L$ of the low-level pulse in the signal are determined by the k-bit information sequence. The value of $PW^H$ and the value of $PW^L$ are in the preset set S. The set S is at least S = {PW1, PW2, ..., PWq}. q = max(xi). PWi ≠ PWj when i ≠ j. All elements in the set S are less than the maximum pulse width PWm. Thus, $PW^H = PWj$, $PW^L = Ti-PWj \in S$. $0 \leq j < q$. $0 < i < s$.

In an example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by (k - 1) bits in the k-bit information sequence. $s = 2^{k-1}$. That is, different groups are formed according to different combinations of subsequences composed of (k - 1) bits in the k-bit information sequence. Sequences corresponding to different sequence states in the same group may be identified by different values of the remaining 1 bit of the k bits. $xi = 2^1$. Further, the signal length T of the signal composed of high-level and low-level pulses is determined by the length k of the information sequence, the basic pulse width PW, and the k-bit information sequence $\{b_i\} = \{b_{k-1}, b_{k-2}, ..., b_1, b_0\}$ ($0 \leq i < k$) and is expressed as $T = PW * (2 + \sum_{i=1}^{k-1} 2^{i-1} b_i)$. Further, the width of the low-level pulse in the signal is determined by the (k - 1)-th bit in the k-bit information sequence, that is, the bit $b_0$. Further, the value of the width of the low-level pulse is taken from the preset set S. The set S is S = {PW1, PW2}. Thus, when the value of the bit $b_0$ is 1, the width $W^L$ of the low-level pulse is PW1 (or PW2); and when the value of the bit $b_0$ is 0, the width of the low-level pulse is PW2 (or PW1). The width of the high-level pulse in the signal is determined by the length T of the signal and the bit $b_0$ in the k-bit information sequence. The width $W^H$ of the high-level pulse is $W^H = T - W^L$.

FIG. 8 is a diagram of a k-bit information sequence with k = 2 according to an embodiment. The preset set S is S = {PW, PW/2}. When the bit b0 in the information sequence is 0, the width of the low-level pulse in the signal is PW. When the bit b0 in the information sequence is 1, the width of the low-level pulse in the signal is PW/2.

In another example, the signal composed of high-level and low-level pulses represents the k-bit information sequence in the following manner: The k-bit information sequence corresponds to $2^k$ sequence states divided into s groups: S1, S2, ..., Ss. The group Si includes xi sequence states. $\sum_{i=1}^{s} x_i = 2^k$. For the group Si, information sequences corresponding to xi different sequence states correspond to the same signal length Ti. For the group Si, there are different pulse width combinations of the high-level pulse and the low-level pulse. Different groups correspond to different signal lengths Ti. Further, sequence states in the s groups are identified by m bits in the k-bit information sequence. $s = 2^m$. That is, different groups are formed according to different combinations of subsequence composed of the m bits in the k-bit information sequence. Sequences corresponding to different sequence states in the same group may be identified by different combinations of subsequence composed of the remaining (k - m) bits of the k bits. $xi = 2^{k-m}$. Further, the length T of the signal composed of high-level and low-level pulses is determined by the length k of the information sequence, the basic pulse width PW, and m bits $\{b_{ij}\} = \{b_{i_{m-1}}, b_{i_{m-2}}, ..., b_{i_1}, b_{i_0}\}$ in the k-bit information sequence $\{b_i\} = \{b_{k-1}, b_{k-2}, ..., b_1, b_0\}$ ($0 \le i < k$).

$0 < m < k$. $0 \le j < m$. $0 \le i_j < k$. $\{b_{ij}\}$ is a subset of $\{b_i\}$. Thus, T can be expressed as $T = PW*(2 + \sum_{j=0}^{m-1} 2^j b_{i_j})$. Further, the width of the low-level pulse in the signal is determined by the remaining (k - m) bits in the k-bit information sequence. Further, the value of the width of the low-level pulse is taken from the preset set S. The set S is S = {PW1, PW2, ..., PW$_{2^{k-m}}$}. Thus, when the decimal value of the (k - m) bits is d, the width $W^L$ of the low-level pulse is PW$_{d+1}$ ($0 \le d < 2^{k-m}$). The width of the high-level pulse in the signal is determined by the length T of the signal and the remaining (k - m) bits in the k-bit information sequence. The width $W^H$ of the high-level pulse is $W^H = T - W^L$.

Embodiment five

In this embodiment, the signal composed of high-level and low-level pulses represents the k-bit information sequence in the following manner: The high-level pulse and/or the low-level pulse in the signal have different widths to represent different bit values.

Further, in this embodiment, the signal length T of the signal composed of high-level and low-level pulses is determined by the length k of the information sequence, the basic pulse width PW, and the k-bit information sequence $\{b_i\} = \{b_{k-1}, b_{k-2}, ..., b_1, b_0\}$ ($0 \le i < k$).

Further, the signal includes M high-level pulses and N = M low-level pulses. M is related to k. In addition, the width of the i-th high-level pulse and/or low-level pulse is determined by the value of the j-th bit in the information sequence. $0 \le i < M$. $0 \le j < k$. i is a function of j. Further, the value of the width of the high-level pulse or the value of the width of the low-level pulse in the signal is taken from a preset set S (a first preset set). The set S includes at least two elements PW1 and PW2. PW1 $\ne$ PW2. All elements in the set S are less than the maximum pulse width PWm.

In an example, the signal includes M high-level pulses and M low-level pulses. M = k. The signal composed of high-level and low-level pulses represents the k-bit information sequence in the following manner: The high-level pulses in the signal have different widths to represent different bit values. Further, the width of the i-th high-level pulse is determined by the value of the j-th bit in the information sequence. $0 \le i = j \le M = k$. Further, the value of the width of the high-level pulse in the signal is taken from the preset set S. The set S includes at least two elements PW1 and PW2. PW1 $\ne$ PW2. Thus, when the j-th bit in the information sequence is 1, the width of the i-th high-level pulse is PW1 (or PW2); and when the j-th bit in the information sequence is 0, the width of the i-th high-level pulse is PW2 (or PW1). i = j. The value of the width of the low-level pulse in the signal is also in the preset set S, denoted as PW3. Thus, the length T of the signal composed of high-level and low-level pulses determined by the length k of the information sequence, the basic pulse width PW, and the k-bit information sequence $\{b_i\} = \{b_{k-1}, b_{k-2}, ..., b_1, b_0\}$ ($0 \le i < k$) is expressed as:

$$T = k*PW3 + PW1*\sum_{i=0}^{k-1}(b_i == 1) + PW2*\sum_{i=0}^{k-1}(b_i == 0),$$

or

$$T = k*PW3 + PW2*\sum_{i=0}^{k-1}(b_i == 1) + PW1*\sum_{i=0}^{k-1}(b_i == 0).$$

$\sum_{i=0}^{k-1}(b_i == 1)$ denotes the number of bits whose bit value is 1 in the k-bit information sequence $\{b_i\} = \{b_{k-1}, b_{k-2}, ..., b_1, b_0\}$

$(0 \leq i < k)$. $\sum_{i=0}^{k-1}(b_i==0)$ denotes the number of bits whose bit value is 0 in the k-bit information sequence.

FIG. 9 is a diagram of a k-bit information sequence with k = 2 according to an embodiment. The preset set S is S = {PW, 2PW}. When the j-th bit in the information sequence is 1, the width of the i-th high-level pulse is 2PW. When the j-th bit in the information sequence is 0, the width of the i-th high-level pulse is PW. $0 \leq i = j \leq M = k$. The width of the low-level pulse in the signal is PW.

Embodiment six

In this embodiment, the signal composed of high-level and low-level pulses represents the k-bit information sequence in at least one of the following manners:

different pulse widths of at least one of the high-level pulse or the low-level pulse in the signal correspond to different bit values;

different pulse width ratios between two consecutive high-level pulses in the signal correspond to different bit values;

different pulse width ratios between two consecutive low-level pulses in the signal correspond to different bit values; or

different pulse width ratios between two consecutive pulses consisting of one high-level pulse and one low-level pulse in the signal correspond to different bit values.

Further, in this embodiment, the length T of the signal composed of high-level and low-level pulses is determined by a preset length L. Further, the preset length L is determined by at least one of the following parameters: the length k of the information sequence or the basic pulse width PW. Further, in the method, the signal includes M high-level pulses and N = M low-level pulses. M is related to k. In addition, the width of the i-th high-level pulse and/or low-level pulse is determined by the value of the j-th bit in the information sequence. $0 \leq i < M$. $0 \leq j < k$. i is a function of j. Further, the value of the width of the high-level pulse or the value of the width of the low-level pulse in the signal is taken from a preset set S. The set S includes at least two elements PW1 and PW2. PW1 $\neq$ PW2. All elements in the set S are less than the maximum pulse width PWm.

In an example, the length T of the signal composed of high-level and low-level pulses is determined by the preset length L. T = L. The preset length L can be expressed as L = M*PW1 + M*PW2. M denotes the number of high-level pulses or low-level pulses in the signal. M = 2k. PW1 and PW2 are two elements in the preset set S. PW1 $\neq$ PW2. The signal composed of high-level and low-level pulses represents the k-bit information sequence in the following manner: The widths of two consecutive high-level pulses in the signal have different ratios to represent different bit values. Further, in the signal including M high-level pulses and M low-level pulses, the width of the i-th high-level pulse is determined by the value of the j-th bit in the information sequence, and the width of the i-th low-level pulse is the same as the width of the i-th high-level pulse. $0 \leq i < M$. $0 \leq j < k$. i is a function of j. Thus, when the j-th bit in the information sequence is 1, the width of the i = 2j-th high-level pulse and low-level pulse is PW1 (or PW2), and the width of the i = (2j + 1)-th high-level pulse and low-level pulse is PW2 (or PW1); and when the j-th bit in the information sequence is 0, the width of the i = 2j-th high-level pulse and low-level pulse is PW2 (or PW1), and the width of the i = (2j + 1)-th high-level pulse and low-level pulse is PW1 (or PW2).

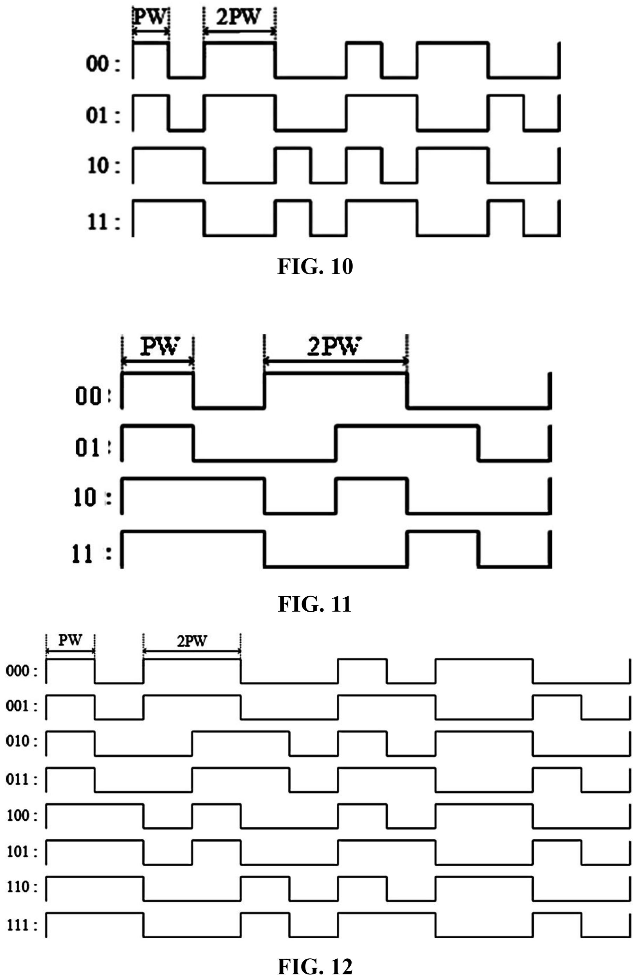

FIG. 10 is a diagram of a k-bit information sequence with k = 2 according to an embodiment. The preset set S is S = {PW, 2PW}. Thus, the length T of the signal is T = L = M*PW1+ M*PW2 = 2k*(PW + 2PW) = 12PW. When the j-th bit is 1, the width of the i = 2j-th high-level pulse and low-level pulse is 2PW, and the width of the i = (2j + 1)-th high-level pulse and low-level pulse is PW. When the j-th bit is 0, the width of the i = 2j-th high-level pulse and low-level pulse is PW, and the width of the i = (2j + 1)-th high-level pulse and low-level pulse is 2PW.

Further, the multi-bit information transmission method of this example is also applicable to single-bit information transmission. That is, the signal representing single-bit information is composed of M = 2 high-level pulses and N = 2 low-level pulses, the length of the signal is determined by the preset length T, and the widths of two high-level pulses in the signal have different ratios to represent the single-bit information to be transmitted.

In an example, the length k of the information sequence is an even number. The length T of the signal composed of high-level and low-level pulses is determined by the preset length L. T = L. The preset length L is determined by the length k of the information sequence and the basic pulse width PW. L = M*PW1 + M*PW2. M denotes the number of high-level pulses or low-level pulses in the signal. M = k. PW1 and PW2 are two elements in the preset set S. PW1 $\neq$ PW2. The signal composed of high-level and low-level pulses represents the k-bit information sequence in the following manner: The widths of two consecutive high-level pulses in the signal have different ratios to represent different bit values, and the widths of two consecutive low-level pulses in the signal have different ratios to represent different bit values. Further, the width of the i-th high-level pulse and the width of the i-th low-level pulse width in the signal are determined by the value of the j-th bit in the information sequence. i is a function of j. Thus, when j is an even number, when the j-th bit in the information sequence is 1, the width of the i = j-th high-level pulse is PW1 (or PW2), and the width of the i = (j + 1)th high-level pulse is PW2 (or PW1); and when the j-th bit in the information sequence is 0, the width of the i = j-th high-level pulse is PW2 (or PW1), and the width of the i = (j + 1)th high-level pulse is PW1 (or PW2). When j is an odd number, when the j-th bit in the information sequence is 1, the width of the i = (j -1)-th low-level pulse is PW1 (or PW2), and the width of the i = j-th low-level pulse is PW2 (or PW1); and when the j-th bit in the information sequence is 0, the width of the i = (j -1)-th low-level pulse is PW2 (or PW1), and the width of the i = j-th low-level pulse is PW1 (or PW2).

FIG. 11 is a diagram of a k-bit information sequence with k = 2 according to an embodiment. The preset set S is S = {PW, 2PW}. Thus, the length of the signal is T = L = M*PW1 + M*PW2 = k*(PW + 2PW) = 6PW. When j is an even number and the j-th bit is 1, the width of the i = j-th high-level pulse is 2PW, and the width of the i = (j + 1)-th high-level pulse is PW. When j is an even number and the j-th bit is 0, the width of the i = j-th high-level pulse is PW, and the width of the i = (j + 1)-th high-level pulse is 2PW. When j is an odd number and the j-th bit is 1, the width of the i = (j - 1)-th low-level pulse is 2PW, and the width of the i = j-th low-level pulse is PW. When j is an odd number and the j-th bit is 0, the width of the i = (j - 1)-th low-level pulse is PW, and the width of the i = j-th low-level pulse is 2PW.

Further, the multi-bit information transmission method of this example is also applicable to single-bit information transmission. That is, the signal representing single-bit information is composed of M = 2 high-level pulses and N = 2 low-level pulses, the length of the signal is determined by the preset length T, and the widths of two low-level pulses in the signal have different ratios to represent the single-bit information to be transmitted.

In an example, the length k of the information sequence is an odd number. The length T of the signal composed of high-level and low-level pulses is determined by the preset length L. T = L. The preset length L is determined by at least one of the length k or the basic pulse width PW of the information sequence. L = M*PW1 + M*PW2. M denotes the number of high-level pulses or low-level pulses in the signal. M = k + 1. PW1 and PW2 are two elements in the preset set S. PW1 ≠ PW2. The signal composed of high-level and low-level pulses represents the k-bit information sequence in the following manner: The widths of two consecutive high-level pulses in the signal have different ratios to represent different bit values, and the widths of two consecutive low-level pulses in the signal have different ratios to represent different bit values. Further, the width of the i-th high-level pulse and the width of the i-th low-level pulse in the signal are determined by the value of the j-th bit in the information sequence. 0 ≤ i < M. 0 ≤ j < k. i is a function of j. Further, the value of the width of the high-level pulse and the value of the width of the low-level pulse in the signal are in the preset set S. The set S includes at least two elements PW1 and PW2. PW1 ≠ PW2. Thus, when 0 ≤ j < k - 1 and j is an even number, when the j-th bit in the information sequence is 1, the width of the i = j-th high-level pulse is PW1 (or PW2), and the width of the i = (j + 1)-th high-level pulse is PW2 (or PW1); and when the j-th bit in the information sequence is 0, the width of the i = j-th high-level pulse is PW2 (or PW1), and the width of the i = (j + 1)-th high-level pulse is PW1 (or PW2). When 0 ≤ j < k-1 and j is an odd number, when the j-th bit in the information sequence is 1, the width of the i = (j - 1) low-level pulse is PW1 (or PW2), and the width of the i = j-th low-level pulse is PW2 (or PW1); and when the j-th bit in the information sequence is 0, the width of the i = (j - 1)-th low-level pulse is PW2 (or PW1), and the width of the i = j-th low-level pulse is PW1 (or PW2). When j = k - 1, and when the j-th bit in the information sequence is 1, the width of the i = j-th high-level pulse and low-level pulse is PW1 (or PW2), and the width of the i = (j + 1)-th high-level pulse and low-level pulse is PW2 (or PW1); and when the j-th bit in the information sequence is 0, the width of the i = j-th high-level pulse and low-level pulse is PW2 (or PW1), and the width of the i = (j + 1)-th high-level pulse and low-level pulse is PW1 (or PW2).

FIG. 12 is a diagram of a k-bit information sequence with k = 3 according to an embodiment. The preset set S is S = {PW, 2PW}. The length of the signal is T = L = M*PW1 + M*PW2 = (k + 1)*(PW + 2PW) = 12PW. When 0 ≤ j < k- 1, j is an even number, and the j-th bit is 1, the width of the i = j-th high-level pulse is 2PW, and the width of the i = (j + 1)-th high-level pulse is PW. When 0 ≤ j < k - 1, j is an even number, and the j-th bit is 0, the width of the i = j-th high-level pulse is PW, and the width of the i = (j + 1)-th high-level pulse is 2PW. When 0 ≤ j < k - 1, j is an odd number, and the j-th bit is 1, the width of the i = (j - 1)-th low-level pulse is 2PW, and the width of the i = j-th low-level pulse is PW. When 0 ≤ j < k - 1, j is an odd number, and the j-th bit is 0, the width of the i = (j - 1)-th low-level pulse is PW, and the width of the i = j-th low-level pulse is 2PW. When j = k - 1, and the j-th bit is 1, the width of the i = j-th high-level pulse and low-level pulse is 2PW, and the width of the i = (j + 1)-th high-level pulse and low-level pulse is PW. When j = k - 1, and the j-th bit is 0, the width of the i = j-th high-level pulse and low-level pulse is PW, and the width of the i = (j + 1)-th high-level pulse and low-level pulse is 2PW.

In an example, the length T of the signal composed of high-level and low-level pulses is determined by the preset length L. T = L. The preset length L can be expressed as L = M*PW1 + M*PW2. M denotes the number of high-level pulses or low-level pulses in the signal. M = k. PW1 and PW2 are two elements in the preset set S. PW1 ≠ PW2. The signal composed of high-level and low-level pulses represents the k-bit information sequence in the following manner: The high-level pulses in the signal have different widths to represent different bit values. Further, the width of the i-th high-level pulse in the signal is determined by the j-th bit in the information sequence. i is a function of j. In this example, i = j. Thus, when the j-th bit in the information sequence is 1, the width of the i-th high-level pulse is PW1 (or PW2); and when the j-th bit in the information sequence is 0, the width of the i-th high-level pulse is PW2 (or PW1). The value of the width of the low-level pulse in the signal is taken from the preset set S and makes the length T of the signal be the preset length L.

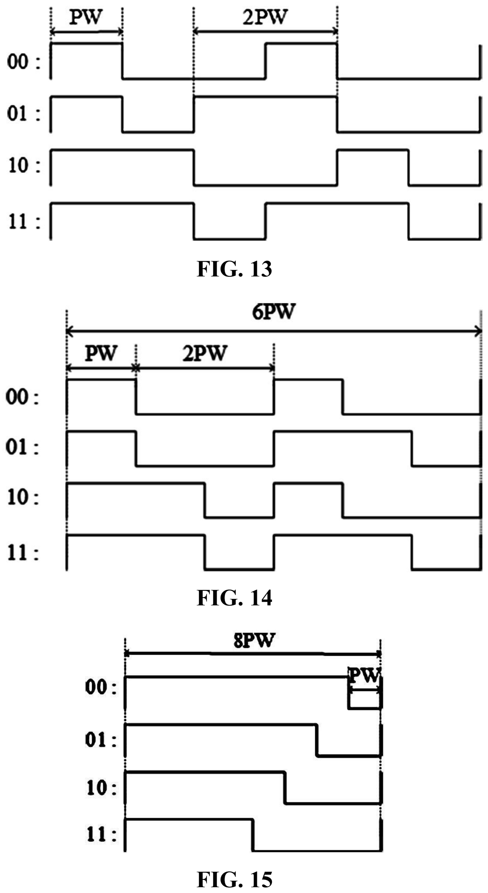

FIG. 13 is a diagram of a k-bit information sequence with k = 2 according to an embodiment. The preset set S is S = {PW, 2PW}, and the length of the signal is T = L = M*PW1 + M*PW2 = k*(PW + 2PW) = 6PW. When the j-th bit is 1, the width of the i-th high-level pulse is 2PW. When the j-th bit is 0, the width of the i-th high-level pulse is PW. i = j. Further, the value of the width of the low-level pulse in the signal is taken from the preset set S and ensures that the length T of the signal is the preset length L.

Further, the multi-bit information transmission method of this example is also applicable to single-bit information transmission. That is, the signal representing single-bit information is composed of M = 1 high-level pulse and N = 1 low-level pulse, the length of the signal is determined by the preset length T, and the high-level pulse in the signal has different widths to represent the single-bit information to be transmitted.

In an example, the length T of the signal composed of high-level and low-level pulses is determined by the preset length L. T = L. The preset length L determined by at least one of the length k of the information sequence or the basic pulse width PW can be expressed as L = M*PW1 + M*PW2. M denotes the number of high-level pulses or low-level pulses in the signal. M = k. PW1 and PW2 are two elements in the preset set S. PW1 $\neq$ PW2. The signal composed of high-level and low-level pulses represents the k-bit information sequence in the following manner: The widths of two consecutive pulses consisting of one high-level pulse and one low-level pulse in the signal have different ratios to represent different bit values. Further, the width of the i-th high-level pulse and the width of the i-th low-level pulse in the signal are determined by the j-th bit in the information sequence. i is a function of j. In this example, i = j. Thus, when the j-th bit in the information sequence is 1, the width of the i-th high-level pulse is PW1 (or PW2), and the width of the i-th low-level pulse is PW2 (or PW1). When the j-th bit in the information sequence is 0, the width of the i-th high-level pulse is PW2 (or PW1), and the width of the i-th low-level pulse is PW1 (or PW2).

FIG. 14 is a diagram of a k-bit information sequence with k = 2 according to an embodiment. The preset set S is S = {PW, 2PW}. The length of the signal is T = L = M*PW1 + M*PW2 = k*(PW + 2PW) = 6PW. When the j-th bit is 1, the width of the i-th high-level pulse is 2PW, and the width of the i-th low-level pulse is PW. When the j-th bit is 0, the width of the i-th high-level pulse is PW, and the width of the i-th low-level pulse is 2PW. i = j.

Further, the multi-bit information transmission method of this example is also applicable to single-bit information transmission. That is, the signal representing single-bit information is composed of M = 1 high-level pulse and N = 1 low-level pulse, the length of the signal is determined by the preset length T, and the widths of the high-level pulse and the low-level pulse in the signal have different ratios to represent the single-bit information to be transmitted.

Embodiment seven

In this embodiment, the signal composed of high-level and low-level pulses represents the k-bit information sequence in the following manner: The widths of high-level pulses and/or low-level pulses in the signal have different combinations to represent different combinations of the sequence.

Further, in this embodiment, the length T of the signal composed of high-level and low-level pulses is determined by a preset length L. Further, the preset length L is determined by at least one of the following parameters: the length k of the information sequence or the basic pulse width PW.

Further, in the method, the signal includes M = 1 high-level pulse and N = 1 low-level pulse. Further, the width of the high-level pulse and/or the low-level pulse in the signal is determined by the k-bit information sequence. Further, the value of the width of the high-level pulse or the value of the width of the low-level pulse in the signal is taken from a preset set S (a first preset set). The set S includes at least two elements PW1 and PW2. PW1 $\neq$ PW2. All elements in the set S are less than the maximum pulse width PWm.

In an example, the signal includes M = 1 high-level pulse and N = 1 low-level pulse. The signal composed of high-level and low-level pulses represents the k-bit information sequence in the following manner: The widths of the high-level pulse and the low-level pulse in the signal have different combinations to represent different combinations of the sequence. Therefore, the width of the high-level pulse in the signal is determined by the k-bit information sequence. Further, the value of the width of the high-level pulse and the value of the width of the low-level pulse in the signal are in the preset set S. The set S includes at least two elements PW1 and PW2. PW1 $\neq$ PW2. Thus, the value of the width $PW^H$ of the high-level pulse and the value of the width $PW^L$ of the low-level pulse in the signal satisfy $PW^H + PW^L = T$. The width of the high-level pulse in the signal is determined by the k-bit information sequence. That is, for $2^k$ different combinations of the k-bit information sequence, there are $2^k$ different high-level pulse widths, and correspondingly, there are also $2^k$ different values of the width of the low-level pulse in the signal.

FIG. 15 is a diagram of a k-bit information sequence with k = 2 according to an embodiment. The value of the width of the high-level pulse is taken from the preset set S. The widths of high-level pulses in signals corresponding to different k-bit information sequences are different. Correspondingly, the value of the width of the low-level pulse is also in the set S. The width of the high-level pulse and the width of the low-level pulse satisfy $PW^H + PW^L = T$. The preset signal length T = 8 PW. The signal includes M = 1 high-level pulse and N = 1 low-level pulse. The preset set S is S = {1PW, 2PW, 3PW, 4PW, 5PW, 6PW, 7PW}. The value of the width of the high-level pulse in the signal is taken from the preset set S, and the widths of the high-level pulses in the signals corresponding to different k-bit information sequences are different. Correspondingly, the value of the width of the low-level pulse is also in the set S and satisfies $PW^H + PW^L = T$.

Embodiment eight

In this embodiment, the signal composed of high-level and low-level pulses represents the k-bit information sequence in the following manner: The widths of high-level pulses and/or low-level pulses in the signal have different combinations to represent different combinations of the sequence.

Further, in this embodiment, the length T of the signal composed of high-level and low-level pulses is determined by a preset length L. Further, the preset length L is determined by at least one of the following parameters: the length k of the information sequence or the basic pulse width PW.

Further, in the method, the signal includes M high-level pulses and N = M low-level pulses. The value of M is related to k. Further, the width of the high-level pulse and/or the low-level pulse in the signal is determined by the k-bit information sequence. Further, the value of the width of the high-level or the value of the width of the low-level pulse in the signal is taken from the preset set S. The set S includes at least two elements PW1 and PW2. PW1 ≠ PW2. All elements in the set S are less than the maximum pulse width PWm.

In an example, the signal includes M high-level pulses and M low-level pulses. M is related to k. The signal composed of high-level and low-level pulses represents the k-bit information sequence in the following manner: The widths of high-level pulses in the signal have different combinations to represent different combinations of the sequence. Thus, the width of the high-level pulse in the signal is determined by the k-bit information sequence. Further, the value of the width of the high-level pulse and the value of the width of the low-level pulse in the signal are in the preset set S. The set S includes at least two elements PW1 and PW2. PW1 ≠ PW2. Thus, the value of the width of the high-level pulse and the value of the width of the low-level pulse in the signal satisfy $\sum_{i=0}^{M-1}\left(PW_i^H + PW_i^L\right) = T$. The widths of the M high-level pulses in the signal are determined by the k-bit information sequence. That is, for $2^k$ different combinations of the k-bit information sequence, there are $2^k$ different M high-level pulse width combinations. $PW_i^H$ and $PW_i^L$ represent the width of the i-th high-level pulse and the width of the i-th low-level pulse respectively.

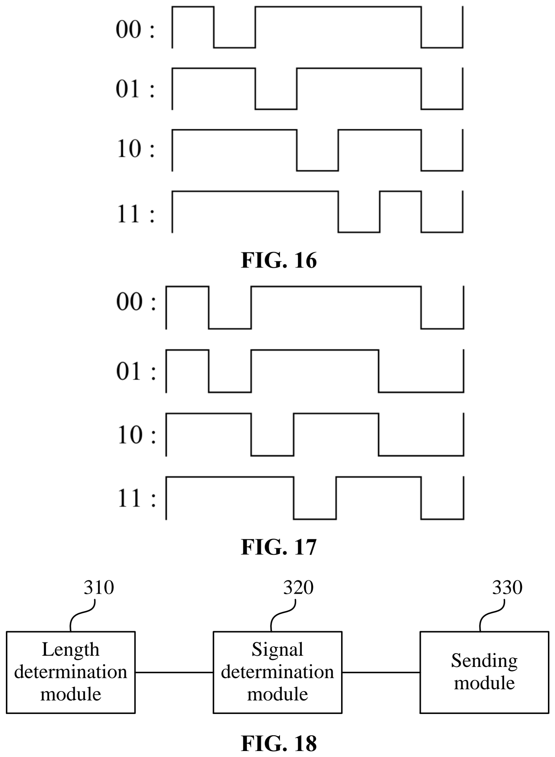

FIG. 16 is a diagram of a k-bit information sequence with k = 2 according to an embodiment. The preset signal length is T = 7PW. The signal includes M high-level pulses and M low-level pulses. M = k. The preset set S is S = {PW, 2PW, 3PW, 4PW}. The value of the width of the low-level pulse in the signal is the element PW in the preset set S. The value of the width of the high-level pulse in the signal is taken from the preset set S. The high-level pulse width combinations of signals corresponding to different k-bit information sequences are different and satisfy $\sum_{i=0}^{M-1} PW_i^H = T - M*PW$.

In an example, the signal includes M high-level pulses and M low-level pulses. M is related to k. The signal composed of high-level and low-level pulses represents the k-bit information sequence in the following manner: The widths of high-level pulses and low-level pulses in the signal have different combinations to represent different combinations of the sequence. Thus, the width of the high-level pulse and the width of the low-level pulse in the signal are determined by the k-bit information sequence. Further, the value of the width of the high-level pulse and the value of the width of the low-level pulse in the signal are in the preset set S. The set S includes at least two elements PW1 and PW2. PW1 ≠ PW2. Thus, the value of the width of the high-level pulse and the value of the width of the low-level pulse in the signal satisfy $\sum_{i=0}^{M-1}\left(PW_i^H + PW_i^L\right) = T$. The pulse width combinations of 2M level pulses in the signal are determined by the k-bit information sequence. That is, for $2^k$ different combinations of the k-bit information sequence, there are $2^k$ different 2M pulse width combinations. $PW_i^H$ and $PW_i^L$ represent the width of the i-th high-level pulse and the width of the i-th low-level pulse respectively.

FIG. 17 is a diagram of a k-bit information sequence with k = 2 according to an embodiment. The preset signal length T = 7PW. The signal includes M high-level pulses and M low-level pulses. M = k. The preset set S is S = {PW, 2PW, 3PW, 4PW}. The values of the widths of the level pulses in the signal are in the preset set S. The pulse width combinations of the signals corresponding to different k-bit information sequences are different.

The multi-bit information transmission method of this embodiment is also applicable to single-bit information transmission. That is, the signal representing single-bit information is composed of M high-level pulses and N = M low-level pulses, the length of the signal is determined by the preset length T, and the widths of the high-level pulses and/or low-level pulses in the signal have different combinations to represent the single-bit information to be transmitted.

Embodiment nine

In this embodiment, the signal composed of high-level and low-level pulses represents the k-bit information sequence in the following manner: The signal has different unit pulse combinations to represent different combinations of the sequence.

Further, in this embodiment, the length T of the signal composed of high-level and low-level pulses is determined by a preset length L. Further, the preset length L is determined by at least one of the following parameters: the length k of the information sequence or the basic pulse width PW.

Further, the signal includes P unit pulses. P is an integer multiple of k.

The width W of each of the P unit pulses is determined by at least one of the following parameters: a preset width, a basic pulse width, or a parameter configured using signaling.

Further, the unit pulse is a unit high-level pulse or a unit low-level pulse. The unit pulse is determined by the k-bit information sequence to ensure that the unit pulses in the signal have different combinations to represent different combinations of the k-bit sequence. Specifically, Table 1 is a combination example of unit pulses according to an embodiment. k = 2. In columns 2 to 5 in the table, 1 represents a unit high-level pulse, and 0 represents a unit low-level pulse.

Table 1 Example of unit pulse combination

| k=2 Combination of the Information Sequence | Example 1 | Example 2 | Example 3 | Example 4 |
|---|---|---|---|---|
| 00 | 01010101 | 10101010 | 00010111 | 00010111 |
| 01 | 01011010 | 11001100 | 00111100 | 00111100 |
| 10 | 10100101 | 11101110 | 11001110 | 01110001 |
| 11 | 10101010 | 11110000 | 11110001 | 11001110 |

Embodiment ten

In this embodiment, the signal representing the k-bit information sequence is composed of high-level and low-level pulses. The start of the signal is a sequential connection of a boundary high-level pulse and a boundary low-level pulse. The end of the signal is a boundary high-level pulse. The width of the boundary high-level pulse and the width of the boundary low-level pulse are the maximum pulse width PWm and play a boundary role without carrying information. The rest of the signal between the boundary pulses is composed of high-level and low-level pulses to represent the k-bit length information sequence. In this embodiment, the signal composed of high-level and low-level pulses represents the k-bit information sequence in at least one of the following manners:

The signals have different lengths T to represent different combinations of the sequence; further, the signals having different lengths have different high-level pulse widths and the same low-level pulse width; or the signals having different lengths have different high-level pulse widths and different low-level pulse widths; or the signals having different lengths have the same high-level pulse width and the same low-level pulse width;

the widths of high-level pulses and/or low-level pulses in the signal have different combinations to represent different combinations of the sequence;

the k-bit information sequence corresponds to $2^k$ sequence states divided into s groups: S1, S2, ..., Ss; the group Si includes xi sequence states; $\sum_{i=1}^{s} x_i = 2^k$; for the group Si, information sequences corresponding to xi different sequence states correspond to the same signal length Ti; for the group Si, there are different pulse width combinations of the high-level pulse and the low-level pulse; different groups correspond to different signal lengths Ti; further, sequence states in the s groups are identified by m bits in the k-bit information sequence; $s = 2^m$; that is, different groups are formed according to different combinations of the subsequence composed of m bits in the k-bit information sequence; sequences corresponding to different sequence states in the same group may be identified by different combinations of the subsequence composed of the remaining (k - m) bits of the k bits. $x_i = 2^{k-m}$; or

the high-level pulses and/or low-level pulses in the signal have different widths to represent different bit values.

Further, in this embodiment, the length T of the signal composed of high-level and low-level pulses is determined by the length k of the information sequence, the basic pulse width PW, the k-bit information sequence $\{b_i\} = \{b_{k-1}, b_{k-2}, ..., b_1, b_0\}$ ($0 \le i < k$), and the maximum pulse width PWm.

Further, in the method, the signal includes M high-level pulses and N low-level pulses. M > N. The value of N is 2 or is related to k or is related to the k-bit information sequence. Further, the width of the 0-th high-level pulse and the width of the (M - 1)-th high-level pulse in the signal are determined by the maximum pulse width; the width of the 0-th low-level pulse in the signal is determined by the basic pulse width PW; and the width of the i-th ($1 \le i < M - 1$) high-level pulse or the width of the n-th (1 ≤ n < N) low-level pulse in the signal is:

determined by the length T of the signal as in embodiment one; or

determined by the length T of the signal and the scale factor a as in embodiment two and embodiment three, where 0 < a < 1, the scale factor a is determined by the information sequence, and the value of the scale factor a is taken from a preset set A (a second preset set); or

determined by the k-bit information sequence as in embodiment four; further, the value of the width of the high-level pulse and/or the value of the width of the low-level pulse in the signal is taken from a preset set S (a first preset set), where the set S includes at least two elements PW1 and PW2, PW1 ≠ PW2, and all elements in the set S are less than the maximum pulse width PWm; or

determined by the value of the j-th bit in the information sequence as in embodiment five, where 0 ≤ j < k, and i or n is a function of j; further, the value of the width of the high-level pulse or the value of the width of the low-level pulse in the signal is taken from a preset set S, where the set S includes at least two elements PW1 and PW2, PW1 ≠ PW2, and all elements in the set S are less than the maximum pulse width PWm.

For technical details not described in this embodiment, see any previous embodiment, and the details are not repeated here.

Embodiment eleven

In this embodiment, the signal representing the k-bit information sequence is composed of high-level and low-level pulses. The start of the signal is a sequential connection of a boundary high-level pulse and a boundary low-level pulse. The end of the signal is a boundary high-level pulse. The width of the boundary high-level pulse and the width of the boundary low-level pulse are the maximum pulse width PWm and play a boundary role without carrying information. The rest of the signal between the boundary pulses is composed of high-level and low-level pulses to represent the k-bit length information sequence. In this embodiment, the signal composed of high-level and low-level pulses represents the k-bit information sequence in at least one of the following manners:

the widths of the high-level pulse and/or the low-level pulse in the signal have different combinations to represent different combinations of the sequence;

the high-level pulse and/or the low-level pulse in the signal have different widths to represent different bit values;

the widths of two consecutive high-level pulses in the signal have different ratios to represent different bit values;

the widths of two consecutive low-level pulses in the signal have different ratios to represent different bit values;

the widths of two consecutive pulses consisting of one high-level pulse and one low-level pulse in the signal have different ratios to represent different bit values; or

the signal has different unit pulse combinations to represent different combinations of the sequence.

Further, in this embodiment, the length T of the signal composed of high-level and low-level pulses is determined by a preset length L and the maximum pulse width PWm. Further, the preset length L is determined by at least one of the following parameters: the length k of the information sequence and the basic pulse width PW.

Further, in the method, the signal includes M high-level pulses and N low-level pulses. M > N. The value of N is 2 or is related to k. Further, the width of the 0-th high-level pulse and the width of the (M - 1)-th high-level pulse in the signal are determined by the maximum pulse width; the width of the 0-th low-level pulse in the signal is determined by the basic pulse width PW; and the width of the i-th (1 ≤ i < M - 1) high-level pulse or the width of the n-th (1 ≤ n < N) low-level pulse in the signal is:

determined by the value of the j-th bit in the information sequence as in embodiment six, where 0 ≤ j < k, and i or n is a function of j; further, the value of the width of the high-level pulse or the value of the width of the low-level pulse in the signal is taken from a preset set S (a first preset set), where the set S includes at least two elements PW1 and PW2, PW1 ≠ PW2, and all elements in the set S are less than the maximum pulse width PWm; or

determined by the k-bit information sequence as in embodiment seven and embodiment eight; further, the value of the width of the high-level pulse and/or the value of the width of the low-level pulse in the signal is taken from a preset set S, where the set S includes at least two elements PW1 and PW2, PW1 ≠ PW2, and all elements in the set S are less than the maximum pulse width PWm.

For technical details not described in this embodiment, see any previous embodiment, and the details are not repeated here.

Embodiment twelve

In this embodiment, the signal representing the k-bit information sequence is composed of high-level and low-level pulses. The start of the signal is a sequential connection of a boundary high-level pulse and a boundary low-level pulse. The end of the signal is a boundary high-level pulse. The width of the boundary high-level pulse and the width of the boundary low-level pulse are the maximum pulse width PWm and play a boundary role without carrying information. The rest of the signal between the boundary pulses is composed of high-level and low-level pulses to represent the k-bit length information sequence. The high-level and low-level pulses are composed of unit pulses. In this embodiment, the signal composed of high-level and low-level pulses represents the k-bit information sequence in the following manner: The signal has different unit pulse combinations to represent different combinations of the sequence.

Further, this embodiment differs from embodiment nine in that in this embodiment, the length T of the signal composed of high-level and low-level pulses is determined by a preset length L and the maximum pulse width PWm. Further, the preset length L is determined by at least one of the following parameters: the length k of the information sequence or the basic pulse width PW.

Further, in this method, the signal is composed of P unit pulses, two boundary high-level pulses, and one boundary low-level pulse. P is an integer multiple of k. The two high-level pulses are located at the beginning and the end of the signal respectively. The widths of the boundary high-level pulses are determined by the maximum pulse width PWm. The one boundary low-level pulse is located after the boundary high-level pulses at the beginning of the signal. The width of the boundary low-level pulse is determined by the maximum pulse width PWm. The width W of the unit pulse is determined by at least one of the following parameters: a preset width, the basic pulse width PW, or configured using signaling. Further, the P unit pulses in the signal are the same as those in embodiment nine, that is, unit high-level pulses or unit low-level pulses determined by the k-bit information sequence to ensure that the unit pulses in the signal have different combinations to represent different combinations of the k-bit sequence.

Embodiment thirteen

This embodiment combines a multi-bit information sending and receiving method with other existing encoding methods. In this embodiment, the signal composed of high-level and low-level pulses represents a k-bit information sequence. k is a positive integer greater than or equal to 2. The k-bit information sequence is obtained from mapping of a k1-bit sequence. k1 is a positive integer less than k. The mapping mode includes at least one of the following:

mapping the k1-bit sequence to the k-bit sequence according to a preset mapping sequence;

mapping the k1-bit sequence to a k-bit sequence according to a preset encoding rule such as Reed-Muller (RM) coding, repetition coding or repetition transmission, or orthogonal coding including Walsh coding; or

dividing the k1-bit sequence into multiple groups and mapping each group according to a preset mapping sequence or a preset encoding rule, where the total length of mapped sequences in the multiple groups is k bits, and the multiple groups use the same preset mapping sequence or encoding rule or use different preset mapping sequences or encoding rules. By way of example, every r1 bits in the k1-bit information sequence are mapped to an r-bit sequence according to a preset mapping sequence or a preset encoding rule. r1 is a positive integer less than k1 and exactly divides k1. r is a positive integer less than k and exactly divides k. k/r = k1/r1.

Further, the k1-bit sequence is mapped to the k-bit sequence through multiple superpositions of the preceding mapping modes. Different superpositions use different mapping modes or use the same mapping mode but different mapping sequences, different encoding rules, or different grouped mappings.

Further, the manner in which the signal represents the k-bit information sequence, the parameters for determining the length T of the signal, the features of the widths of the high-level, and low-level pulses are the same as those in embodiment one and embodiment two. This is not repeated in this embodiment.

In an example, the signal composed of high-level and low-level pulses represents a k-bit information sequence.

The k-bit information sequence is mapped from a k1-bit sequence according to a preset mapping sequence. For example, when k1 = 2 and k = 8, the mapping sequences listed in Table 1 can be used.

By way of example, Table 2 to Table 5 list examples of preset mapping sequences for k1 = 1, k = 2, for k1 = 1, k = 3, for k1 = 2, k = 16, and for k1 = 3, k = 12 respectively.

Table 2 Preset mapping sequence for k1 = 1, k = 2

| k1-bit sequence with k1 = 1 | k-bit sequence with k = 2 |
| --- | --- |
| 0 | 01 |
| 1 | 10 |

Table 3 Preset mapping sequence for k1 = 1, k = 3

| k1-bit sequence with k1 = 1 | k-bit sequence 1 with k = 3 | k-bit sequence 2 with k = 3 |
| --- | --- | --- |
| 0 | 101 | 011 |
| 1 | 110 | 101 |

Table 4 Preset mapping sequence for k1 = 2, k = 16

| k1-bit sequence with k1 = 2 | k-bit sequence with k = 16 |
| --- | --- |
| 00 | 0011001100110011 |
| 01 | 0110011001100110 |
| 10 | 1010101010101010 |
| 11 | 1100110011001100 |

Table 5 Preset mapping sequence for k1 = 3, k = 12

| k1-bit sequence with k1 = 3 | k-bit sequence with k = 12 |
| --- | --- |
| 000 | 100100110101 |
| 001 | 110111101001 |
| 010 | 001100101011 |
| 011 | 111101100111 |
| 100 | 110100100101 |
| 101 | 111010011011 |
| 110 | 011110010101 |
| 111 | 110010011101 |

In an example, the signal composed of high-level and low-level pulses represents a k-bit information sequence. The k-bit information sequence is mapped from a k1-bit sequence according to a preset encoding rule such as RM coding, repetition coding or repetition transmission, or orthogonal coding including Walsh coding. k is a positive integer greater than or equal to 2. k1 is a positive integer less than k. Table 6 lists an example of a mapping mode based on 8th-order Walsh coding for k1 = 2, k = 8.

Table 6 Mapping mode based on 8th-order Walsh coding for k1 = 2, k = 8

| k1-bit sequence with k1 = 2 | k-bit sequence with k = 8 |
| --- | --- |
| 00 | 01010101 |
| 01 | 01100110 |
| 10 | 01011010 |
| 11 | 01101001 |

In an example, the signal composed of high-level and low-level pulses represents a k-bit information sequence. Every r1 bits in the k1-bit sequence are mapped to an r-bit sequence according to a preset mapping sequence or a preset encoding rule. A combination of the obtained r-bit sequences constitutes the k-bit information sequence. r1 is a positive integer less than k1 and divides k1. r is a positive integer less than k and divides k. k/r = k1/r1. For example, every r1 bits in the k1-bit sequence are mapped to an r-bit sequence according to a preset encoding rule such as RM coding, repetition coding or repetition transmission, or orthogonal coding including Walsh coding. A combination of the k1/r1 groups of r-bit sequences constitutes the k-bit information sequence.

In an example, the signal composed of high-level and low-level pulses represents a k-bit information sequence. The k-bit information sequence is obtained from a k1-bit sequence through multiple superpositions of the preceding mapping modes. For example, first, the k1-bit sequence is mapped to a k'-bit sequence according to a preset mapping sequence, and then the k'-bit sequence is mapped to a k-bit sequence according to a preset encoding rule. Table 7 lists an example of superpositions of mapping modes for k1 = 2, k' = 4, and k = 8. In this example, first, the k1-bit sequence with k1 = 2 is mapped to a k'-bit sequence with k' = 4 according to 4th-order Walsh coding, and then the k'-bit sequence with k' = 4 is mapped to a k-bit sequence with k = 8 bit by bit according to the preset mapping sequence defined in Table 2.

Table 7 Example of superpositions of mapping modes for k1 = 2, k' = 4, k = 8

| k1-bit sequence with k1 = 2 | k'-bit Walsh code sequence with k' = 4 | k-bit sequence with k = 8 |
|---|---|---|
| 00 | 0000 | 01010101 |
| 01 | 0101 | 01100110 |
| 10 | 0011 | 01011010 |
| 11 | 0110 | 01101001 |

In an example, a k1-bit sequence is mapped to a k'-bit sequence according to a preset encoding rule such as 4th-order, 8th-order, or 16th-order Walsh coding, then the k'-bit sequence is mapped to a k"-bit sequence bit by bit according to a preset mapping sequence as listed in Table 2 or Table 3, and then the k"-bit sequence is mapped to a k-bit sequence according to a preset encoding rule such as repeated transmission. Table 8 lists an example of superpositions of mapping modes for k1 = 2, k' = 4, k" = 12, and k = 24. In this example, a k1-bit sequence with k1 = 2 is mapped to a k'-bit sequence with k' = 4 according to 4th-order Walsh coding, then mapped to a k"-bit sequence with k" = 12 bit by bit according to a preset mapping sequence as listed in Table 3, and then mapped to a k-bit sequence with k = 24 through sequence repetition.

Table 8 Example of superpositions of mapping modes for k1 = 2, k' = 4, k" = 12, and k = 24

| k1-bit sequence with k1 = 2 | k'-bit Walsh sequence with k' = 4 | k"-bit sequence with k" = 12 | k-bit sequence with k = 24 |
|---|---|---|---|
| 00 | 0000 | 101101101101 | 101101101101101101101101 |
| 01 | 0101 | 101110101110 | 101110101110101110101110 |
| 10 | 0011 | 101101110110 | 101101110110101101110110 |
| 11 | 0110 | 101110110101 | 101110110101101110110101 |

Embodiment fourteen

This embodiment combines a multi-bit information sending and receiving method with other existing encoding methods. In this embodiment, the signal composed of high-level and low-level pulses represents a k-bit information sequence. k is a positive integer greater than or equal to 2. The k-bit information sequence is mapped to a k2-bit sequence. The k2-bit sequence is mapped to construct the signal composed of high-level and low-level pulses in a manner as described in embodiment one to embodiment twelve. k is a positive integer greater than or equal to 2. k2 is a positive integer greater than k. The mapping mode includes at least one of the following:

mapping the k-bit sequence to the k2-bit sequence according to a preset mapping sequence;

mapping the k-bit sequence to the k2-bit sequence according to a preset encoding rule such as RM coding, repetition coding or repetition transmission, or orthogonal coding including Walsh coding; or

dividing the k-bit sequence into multiple groups and mapping each group according to a preset mapping sequence or a preset encoding rule, where the total length of mapped sequences in the multiple groups is k2 bits, and the multiple groups use the same preset mapping sequence or encoding rule or use different preset mapping sequences or encoding rules. By way of example, every r bits of the k-bit sequence are mapped to an r2-bit sequence according to a preset mapping sequence or a preset encoding rule. r2 is a positive integer less than k2 and divides k2. r is a positive integer less than k and divides k. k/r = k2/r2.

Further, the k-bit sequence is mapped to the k2-bit sequence through multiple superpositions of the preceding mapping modes. Different superpositions use different mapping modes or use the same mapping mode but different mapping sequences, different encoding rules, or different grouped mappings.

The multi-bit information transmission method of this embodiment is also applicable to single-bit information transmission. That is, the single bit is first mapped to the k2-bit sequence according to the preceding mapping mode, and then the signal composed of high-level and low-level pulses is determined in the same manner as in embodiment one to thirteen.

In an example, the signal composed of high-level and low-level pulses directly represents a k2-bit information sequence and indirectly represents a k-bit information sequence. The k-bit information sequence is mapped to a k2-bit sequence according to a preset mapping sequence. For example, when k = 2, and k2 = 8, the mapping sequences listed in Table 1 can be used. Table 9 to Table 12 are examples of preset mapping sequences for k = 1, k2 = 2, for k = 1, k2 = 3, for k = 2, k2 = 16, and for k = 3, k2 = 12 respectively.

Table 9 Preset mapping sequence for k = 1, k2 = 2

| k-bit sequence with k = 1 | k2-bit sequence with k2 = 2 |
| --- | --- |
| 0 | 01 |
| 1 | 10 |

Table 10 Preset mapping sequence for k = 1, k2 = 3

| k-bit sequence with k = 1 | k2-bit sequence 1 with k2 = 3 | k2-bit sequence 2 with k2 = 3 |
| --- | --- | --- |
| 0 | 101 | 011 |
| 1 | 110 | 101 |

Table 11 Preset mapping sequence for k = 2, k2 = 16

| k-bit sequence with k = 2 | k2-bit sequence with k2 = 16 |
| --- | --- |
| 00 | 0011001100110011 |
| 01 | 0110011001100110 |
| 10 | 1010101010101010 |
| 11 | 1100110011001100 |

Table 12 Preset mapping sequence for k = 3, k2 = 12

| k-bit sequence with k = 3 | k2-bit sequence with k2 = 12 |
| --- | --- |
| 000 | 100100110101 |
| 001 | 110111101001 |
| 010 | 001100101011 |
| 011 | 111101100111 |
| 100 | 110100100101 |
| 101 | 111010011011 |
| 110 | 011110010101 |
| 111 | 110010011101 |

In an example, the k2-bit information sequence is mapped from a k-bit sequence according to a preset encoding rule such as RM coding, repetition coding or repetition transmission, or orthogonal coding including Walsh coding. k is a positive integer greater than or equal to 2. k is a positive integer less than k2. Table 13 lists an example of a mapping mode based on 8th-order Walsh coding for k = 2, k2 = 8.

Table 13 Mapping mode based on 8th-order Walsh coding for k = 2, k2 = 8

| k-bit sequence with k = 2 | k2-bit sequence with k2 = 8 |
|---|---|
| 00 | 01010101 |
| 01 | 01100110 |
| 10 | 01011010 |
| 11 | 01101001 |

In an example, every r bits in the k-bit sequence are mapped to an r2-bit sequence according to a preset mapping sequence or a preset encoding rule. A combination of the obtained r2-bit sequences constitutes the k2-bit information sequence. r is a positive integer less than k and divides k. r2 is a positive integer less than k2 and divides k2. k/r = k2/r2. For example, every r bits in the k-bit sequence are mapped to an r2-bit sequence according to a preset encoding rule such as RM coding, repetition coding or repetition transmission, or orthogonal coding including Walsh coding. A combination of the k/r groups of r2-bit sequences constitutes the k2-bit information sequence.

In an example, the k2-bit information sequence is obtained from a k-bit sequence through multiple superpositions of the preceding mapping modes. For example, first, the k-bit sequence is mapped to a k'-bit sequence according to a preset mapping sequence, and then the k'-bit sequence is mapped to a k2-bit sequence according to a preset encoding rule. Table 14 lists an example of superpositions of mapping modes based on 8th-order Walsh coding for k = 2, k' = 4, k2 = 8. In this example, first, the k-bit sequence with k = 2 is mapped to a k'-bit sequence with k' = 4 according to 4th-order Walsh coding, and then the k'-bit sequence with k' = 4 is mapped to a k2-bit sequence with k2 = 8 bit by bit according to the preset mapping sequence defined in Table 7.

Table 14 Example of superpositions of mapping modes for k = 2, k' = 4, k2 = 8

| k-bit sequence with k = 2 | k'-bit Walsh sequence with k' = 4 | k2-bit sequence with k2 = 8 |
|---|---|---|
| 00 | 0000 | 01010101 |
| 01 | 0101 | 01100110 |
| 10 | 0011 | 01011010 |
| 11 | 0110 | 01101001 |

In an example, a k-bit sequence is mapped to a k'-bit sequence according to a preset encoding rule such as 4th-order, 8th-order, or 16th-order Walsh coding, then the k'-bit sequence is mapped to a k"-bit sequence bit by bit according to a preset mapping sequence as listed in Table 2 or Table 3, and then the k"-bit sequence is mapped to a k2-bit sequence according to a preset encoding rule such as repeated transmission. Table 15 lists an example of superpositions of mapping modes for k = 2, k' = 4, k" = 12, k2 = 24. In this example, a k-bit sequence with k = 2 is mapped to a k'-bit sequence with k' = 4 according to 4th-order Walsh coding, then mapped to a k"-bit sequence with k" = 12 bit by bit according to a preset mapping sequence as listed in Table 3, and then mapped to a k2-bit sequence with k2 = 24 through sequence repetition.

Table 15 Example of superpositions of mapping modes for k = 2, k' = 4, k" = 12, k2 = 24

| k-bit sequence with k = 2 | k'-bit Walsh sequence with k' = 4 | k"-bit sequence with k" = 12 | k2-bit sequence with k2 = 24 |
|---|---|---|---|
| 00 | 0000 | 101101101101 | 101101101101101101101101 |
| 01 | 0101 | 101110101110 | 101110101110101110101110 |
| 10 | 0011 | 101101110110 | 101101110110101101110110 |
| 11 | 0110 | 101110110101 | 101110110101101110110101 |

EP 4 718 793 A1

Embodiment fifteen

This embodiment combines a multi-bit information sending method and a multi-bit information receiving method. The multi-bit information transmission method includes that one or more first transmission nodes send a signal composed of high-level and low-level pulses to one or more second transmission nodes, and one or more second transmission nodes receive the signal composed of high-level and low-level pulses sent by the one or more first transmission nodes. The signal represents a k-bit information sequence. k is a positive integer greater than or equal to 2.

The k-bit information sequence corresponds to $2^k$ sequence states divided into s groups: S1, S2, ..., Ss. The group Si includes xi sequence states. $\sum_{i=1}^{s} x_i = 2^k$ . The xi information sequences in the group Si may be the signal composed of high-level and low-level pulses as determined in embodiments one to fifteen. Implementations of determining the signal may be different for different groups.

Alternatively, the k-bit information sequence corresponds to k information bits divided into b groups: B1, B2, ..., Bb. The number of information bits in each group is $c_i$. $\sum_{i=1}^{b} c_i = k$ . Partial signals composed of high-level and low-level pulses corresponding to the ci information bits in group Bi may be determined in the same manner as embodiments one to fifteen. Thus, b groups of partial signals constitute the signal representing the k-bit information.

Embodiments of the present application also provide an information sending apparatus. FIG. 18 is a diagram illustrating the structure of an information sending apparatus according to an embodiment. As shown in FIG. 18, the information sending apparatus includes a length determination module 310, a signal determination module 320, and a sending module 330.

The length determination module 310 is configured to determine the signal length of the signal. The signal represents a k-bit information sequence. k is an integer greater than or equal to 2. k is a preset value or a value configured using signaling.

The signal determination module 320 is configured to determine the signal. The signal includes a high-level pulse and a low-level pulse. Different pulse combination modes of the signal correspond to different k-bit information sequences.

The transmission module 330 is configured to transmit the signal carrying the information sequence.

In this embodiment, the information sending apparatus is configured to transmit, by using high-level pulses and low-level pulses, a signal carrying an information sequence, thereby enabling multi-bit information transmission and improving the coverage range and transmission rate of information encoding.

In an embodiment, the signal satisfies at least one of the following: the signal length of the signal is the duration of the signal;

the pulse width of the high-level pulse in the signal is the duration of the high-level pulse, and the pulse width of the low-level pulse in the signal is the duration of the low-level pulse; or

the high-level pulse and the low-level pulse in the signal correspond to at least one modulation symbol having the same length but different amplitude values, where different amplitudes of the at least one modulation symbol are represented by the high-level pulse and the low-level pulse, or presence and absence of data transmission of the at least one modulation symbol are represented by the high-level pulse and the low-level pulse.

In an embodiment, the signal satisfies at least one of the following:

different signal lengths correspond to different combinations of the information sequence; and signals having different signal lengths are different in high-level pulse width and the same in low-level pulse width; or signals having different signal lengths are different in high-level pulse width and different in low-level pulse width;

different pulse width combinations of at least one of the high-level pulse or the low-level pulse in the signal correspond to different combinations of the information sequence;

the information sequence corresponds to $2^k$ sequence states divided into multiple groups; different groups correspond to different signal lengths; for the same group, information sequences corresponding to different sequence states correspond to the same signal length; for the same group, there are different pulse width combinations of the high-level pulse and the low-level pulse; by way of example, a k-bit information sequence corresponds to $2^k$ sequence states divided into s groups: S1, S2, ..., Ss; the group Si includes xi sequence states: $\sum_{i=1}^{s} x_i = 2^k$ ; for the group Si, information sequences corresponding to xi different sequence states correspond to the same signal length Ti; for the group Si, there are different pulse width combinations of the high-level pulse and the low-level pulse that correspond to the information sequences corresponding to the xi different sequence states in the group Si; and different groups correspond to different signal lengths Ti;

different pulse widths of at least one of the high-level pulse or the low-level pulse in the signal correspond to different bit values;

different pulse width ratios between two consecutive high-level pulses in the signal correspond to different bit values, where the two consecutive high-level pulses refer to two high-level pulses adjacent to the same low-level pulse, one preceding and the other following the low-level pulse;

different pulse width ratios between two consecutive low-level pulses in the signal correspond to different bit values, where the two consecutive low-level pulses refer to two low-level pulses adjacent to the same high-level pulse, one preceding and the other following the high-level pulse;

different pulse width ratios between two consecutive pulses consisting of one high-level pulse and one low-level pulse in the signal correspond to different bit values; or

different unit pulse combinations of the signal correspond to different combinations of the information sequence.

In an embodiment, the information sequence corresponds to $2^k$ sequence states divided into $2^m$ groups. Each group includes $2^{k-m}$ sequence states. Sequence states in each group are identified by m bits in the k-bit information sequence. Different groups correspond to different signal lengths. Information sequences corresponding to different sequence states in the same group are each identified by a subsequence composed of the remaining (k - m) bits in the k-bit information sequence. The information sequences corresponding to the different sequence states in the same group correspond to the same signal length. For the same group, there are different pulse width combinations of the high-level pulse and the low-level pulse that correspond to information sequences corresponding to $2^{k-m}$ sequence states of the group. m is a positive integer less than k.

In an embodiment, the signal length of the signal is determined according to at least one of the following: k, a basic pulse width, the maximum pulse width, the information sequence, or a preset length.

The preset length is determined according to at least one of k or the basic pulse width.

In an embodiment, the signal includes M high-level pulses and N low-level pulses. M = N, or M > N.

The value of M is a positive integer or is determined according to k or is determined according to the information sequence.

The value of N is a positive integer or is determined according to k or is determined according to the information sequence.

In an embodiment, the width of a pulse in the signal satisfies at least one of the following:

the pulse in the signal is determined by a basic pulse width;

the pulse in the signal is determined by the information sequence;

the pulse in the signal is determined by the signal length of the signal;

the pulse in the signal is determined by the signal length of the signal and a scale factor, where the scale factor is a positive real number less than 1 and is determined by the information sequence;

the width of at least one of the i-th high-level pulse or the n-th low-level pulse in the signal is determined by the value of the j-th bit in the information sequence, where $0 \leq i < M$, $0 \leq n < N$, $0 \leq j < k$, i is a function of j, and n is a function of j; or

the width of the 0-th high-level pulse and the width of the (M - 1)-th high-level pulse in the signal are determined by the maximum pulse width.

M denotes the number of high-level pulses. N denotes the number of low-level pulses.

In an embodiment, the value of the width of the high-level pulse in the signal or the value of the width of the low-level pulse in the signal is taken from a first preset set. The first preset set includes at least two unequal elements.

All elements in the first preset set are less than the maximum pulse width.

In an embodiment, the value of the scale factor is taken from a second preset set. The second preset set includes at least two unequal elements. Each element in the second preset set is a positive real number less than 1.

In an embodiment, the signal includes P unit pulses. P is an integer multiple of k.

The width of each of the P unit pulses is determined by at least one of the following parameters: a preset width, a basic pulse width, or a parameter configured using signaling.

In an embodiment, each of the P unit pulses is a unit high-level pulse or a unit low-level pulse and is determined by the information sequence.

In an embodiment, the information sequence is obtained from mapping of a k1-bit sequence. k1 is a positive integer less than k.

In an embodiment, a mapping relationship between the information sequence and the k1-bit sequence satisfies at least one of the following mapping modes:

mapping the k1-bit sequence to the k-bit information sequence according to a preset mapping sequence;

mapping the k1-bit sequence to the information sequence according to a preset encoding rule; or

dividing the k1-bit sequence into multiple groups and mapping each group according to a preset mapping sequence or a preset encoding rule, where the total length of mapped sequences in the multiple groups is k bits, and the multiple groups use the same preset mapping sequence or encoding rule or use different preset mapping sequences or encoding rules.

In an embodiment, the mapping relationship between the information sequence and the k1-bit sequence satisfies multiple superpositions of at least one of the mapping modes.

In an embodiment, different superpositions use different mapping modes or use the same mapping mode but different mapping sequences, different encoding rules, or different grouped mappings.

In an embodiment, the information sequence is mapped to a k2-bit sequence, and the signal is constructed based on the k2-bit sequence and is composed of the high-level pulse and the low-level pulse. k2 is a positive integer greater than k.

In an embodiment, a mapping relationship between the information sequence and the k2-bit sequence satisfies at least one of the following mapping modes:

mapping the k-bit information sequence to the k2-bit sequence according to a preset mapping sequence;

mapping the k-bit information sequence to the k2-bit sequence according to a preset encoding rule; or

dividing the k-bit sequence into multiple groups and mapping each group according to a preset mapping sequence or a preset encoding rule, where the total length of mapped sequences in the multiple groups is k1 bits, and the multiple groups use the same preset mapping sequence or encoding rule or use different preset mapping sequences or encoding rules.

In an embodiment, the mapping relationship between the information sequence and the k2-bit sequence includes multiple superpositions of the mapping modes.

In an embodiment, different superpositions use different mapping modes or use the same mapping mode but different mapping sequences, different encoding rules, or different grouped mappings.

The information sending apparatus of this embodiment is based on the same inventive concept as the information sending method of any previous embodiment. For technical details not described in this embodiment, see any previous embodiment. This embodiment has the same beneficial effect as the performed information sending method.

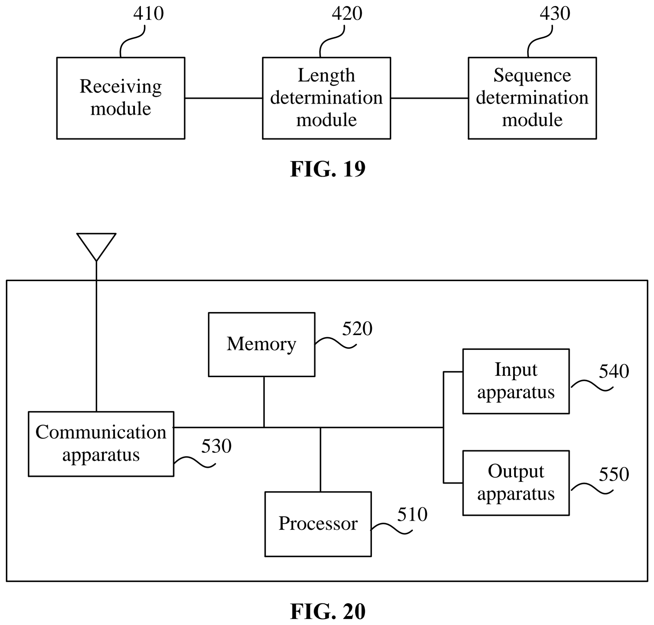

Embodiments of the present application also provide an information receiving apparatus. FIG. 19 is a diagram illustrating the structure of an information receiving apparatus according to an embodiment. As shown in FIG. 19, the information receiving apparatus includes a receiving module 410, a length determination module 420, and a sequence determination module 430.

The receiving module 410 is configured to receive a signal carrying an information sequence.

The length determination module 420 is configured to determine the signal length of the signal. The signal represents a k-bit information sequence. k is an integer greater than or equal to 2. k is a preset value or a value configured using signaling.

The sequence determination module 430 is configured to determine the information sequence carried by the signal according to a correspondence between the signal length of the signal, different pulse combination modes, and different k-bit information sequences.

In this embodiment, the information receiving apparatus is configured to transmit, by using high-level pulses and low-level pulses, a signal carrying an information sequence, thereby enabling multi-bit information transmission and improving the coverage range and transmission rate of information encoding.

In this embodiment, the correspondence between the signal length of the signal, different pulse combination modes, and different k-bit information sequences includes at least one of the following:

different signal lengths correspond to different k-bit information sequences;

different pulse width combinations of at least one of the high-level pulse or the low-level pulse in the signal correspond to different combinations of the k-bit information sequence;

the information sequence corresponds to $2^k$ sequence states divided into multiple groups, different signal lengths correspond to different groups, and different pulse width combinations of at least one of the high-level pulse or the low-level pulse in the signal having the same signal length correspond to information sequences corresponding to different sequence states in the same group;

different pulse widths of at least one of the high-level pulse or the low-level pulse in the signal correspond to different bit values;

different pulse width ratios between two consecutive high-level pulses in the signal correspond to different bit values;

different pulse width ratios between two consecutive low-level pulses in the signal correspond to different bit values;

different pulse width ratios between two consecutive pulses consisting of one high-level pulse and one low-level pulse in the signal correspond to different bit values; or

different unit pulse combinations of the signal correspond to different combinations of the information sequence.

In an embodiment, the information sequence corresponds to $2^k$ sequence states divided into $2^m$ groups. Each group includes $2^{k-m}$ sequence states. Different signal lengths correspond to different groups of information sequences, that is, correspond to different values of m bits in different information sequences. Different pulse width combinations of at least one of the high-level pulse or the low-level pulse in the signal having the same signal length correspond to information sequences corresponding to different sequence states in the same group, that is, correspond to different values of the remaining (k - m) bits in the information sequence. m is a positive integer less than k.

In an embodiment, the information sequence is obtained from mapping of a bit sequence according to a mapping relationship that satisfies at least one of the following mapping modes:

a preset mapping sequence;

a preset encoding rule;

a preset grouped mapping, where the information sequence is divided into multiple groups, and the multiple groups use the same preset mapping sequence or encoding rule or use different preset mapping sequences or encoding rules; or

multiple superpositions of a preset mapping sequence and/or a preset encoding rule and/or a preset grouped mapping, where different superpositions use different mapping sequences and/or different encoding rules and/or different grouped mappings.

The information receiving apparatus of this embodiment and the information receiving method of any previous embodiment belong to the same inventive concept. For technical details not described in detail in this embodiment, see any previous embodiment. This embodiment has the same beneficial effects as the information receiving method performed.

Embodiments of the present application also provide a transmission node. FIG. 20 is a diagram illustrating the hardware structure of a transmission node according to an embodiment. As shown in FIG. 20, the transmission node of the present application includes a processor 510 and a memory 520. One or more processors 510 may be provided in the transmission node. In FIG. 20, one processor 510 is used as an example. The memory 520 is configured to store one or more programs. The one or more programs are executed by the one or more processors 510 to cause the one or more processors 510 to perform the information sending method or the information receiving method of embodiments of the present application.

The transmission node also includes a communication apparatus 530, an input apparatus 540, and an output apparatus 550.

The processor 510, the memory 520, the communication apparatus 530, the input apparatus 540, and the output apparatus 550 in the transmission node may be connected via a bus or in other manners. In FIG. 20, the connection via a bus is shown as an example.

The input apparatus 540 may be configured to receive inputted digital or character information and generate key signal input related to user settings and function control of the transmission node. The output apparatus 550 may include a display screen and other display devices.

The communication apparatus 530 may include a receiver and a transmitter. The communication apparatus 530 is configured to perform information transceiving communications under the control of the processor 510.

As a computer-readable storage medium, the memory 520 may be configured to store software programs, computer-executable programs, and modules, such as program instructions/modules corresponding to the information sending method in the embodiments of the present application (for example, the length determination module 310, the signal determination module 320, and the sending module 330 in the information sending apparatus). The memory 520 may include a program storage region and a data storage region, where the program storage region may store an operating system and an application program required by at least one function, and the data storage region may store data created according to the use of the transmission node. In addition, the memory 520 may include a high-speed random access memory and a nonvolatile memory, such as at least one disk memory, a flash memory or other nonvolatile solid-state memories. In some examples, the memories 520 may also include memories remote from the processors 510 and connectable to the transmission node via a network. Examples of the network include, but are not limited to, the Internet, an intranet, a local area network, a mobile communication network, and a combination thereof.

Embodiments of the present application also provide a storage medium storing a computer program which, when executed by a processor, causes the processor to perform the information sending method or the information receiving method of any embodiment of the present application. The information sending method includes determining the signal length of a signal, where the signal represents a k-bit information sequence, k is an integer greater than or equal to 2, and k is a preset value or a value configured using signaling; determining the signal, where the signal includes a high-level pulse and a low-level pulse, and different pulse combination modes of the signal correspond to different k-bit information sequences; and transmitting the signal carrying the information sequence.

The information receiving method includes receiving a signal carrying an information sequence; determining the signal length of the signal, where the signal represents a k-bit information sequence, k is an integer greater than or equal to 2, and k is a preset value or a value configured using signaling; and determining the information sequence carried by the signal according to a correspondence between the signal length of the signal, different pulse combination modes, and different k-bit information sequences.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system or device.

The computer-readable signal medium may include a data signal propagated in a baseband or as part of a carrier, where the data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system or device.

The program codes included in the computer-readable medium may be transmitted in any suitable medium including, but not limited to, a wireless medium, a wire, an optical cable, radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information sending method, comprising:

    determining a signal length of a signal, wherein the signal represents a k-bit information sequence, k is an integer greater than or equal to 2, and k is a preset value or a value configured using signaling;
    determining the signal, wherein the signal comprises a high-level pulse and a low-level pulse, and different pulse combination modes of the signal correspond to different k-bit information sequences; and
    transmitting the signal carrying the information sequence.

2. The method of claim 1, wherein the signal satisfies at least one of the following:

    a signal length of the signal is a duration of the signal;
    a pulse width of the high-level pulse in the signal is a duration of the high-level pulse, and a pulse width of the low-level pulse in the signal is a duration of the low-level pulse; or
    the high-level pulse and the low-level pulse in the signal correspond to at least one modulation symbol having a same length but different amplitude values, wherein different amplitudes of the at least one modulation symbol are represented by the high-level pulse and the low-level pulse, or presence and absence of data transmission of the at least one modulation symbol are represented by the high-level pulse and the low-level pulse.

3. The method of claim 1, wherein the signal satisfies at least one of the following:

    different signal lengths of the signal correspond to different combinations of the information sequence;
    different pulse width combinations of at least one of the high-level pulse or the low-level pulse in the signal correspond to different combinations of the information sequence;
    the information sequence corresponds to $2^k$ sequence states divided into a plurality of groups; for a same group among the plurality of groups, information sequences corresponding to different sequence states correspond to a same signal length and correspond to different pulse width combinations of the high-level pulse and the low-level pulse; and different groups among the plurality of groups correspond to different signal lengths;

different pulse widths of at least one of the high-level pulse or the low-level pulse in the signal correspond to different bit values;

different pulse width ratios between two consecutive high-level pulses in the signal correspond to different bit values;

different pulse width ratios between two consecutive low-level pulses in the signal correspond to different bit values;

different pulse width ratios between two consecutive pulses consisting of one high-level pulse and one low-level pulse in the signal correspond to different bit values; or

different unit pulse combinations of the signal correspond to different combinations of the information sequence.

4. The method of claim 3, wherein
the information sequence corresponds to $2^k$ sequence states divided into $2^m$ groups, and each group among the $2^m$ groups comprises $2^{k-m}$ sequence states, wherein sequence states in each group among the $2^m$ groups are identified by m bits in the k-bit information sequence, different groups among the $2^m$ groups correspond to different signal lengths, information sequences corresponding to different sequence states in a same group among the $2^m$ groups are each identified by a subsequence composed of remaining (k - m) bits of k bits in the k-bit information sequence, the information sequences corresponding to the different sequence states in the same group among the $2^m$ groups correspond to a same signal length, and for the same group among the $2^m$ groups, different pulse width combinations of the high-level pulse and the low-level pulse correspond to information sequences corresponding to $2^{k-m}$ sequence states of the group, wherein m is a positive integer less than k.

5. The method of claim 1, wherein

the signal length of the signal is determined according to at least one of the following: k, a basic pulse width, a maximum pulse width, the information sequence, or a preset length, wherein
the preset length is determined according to at least one of k or the basic pulse width.

6. The method of claim 1, wherein the signal comprises M high-level pulses and N low-level pulses, wherein

$$M = N, \text{ or } M > N;$$

a value of M is a positive integer or is determined according to k or is determined according to the information sequence; and
a value of N is a positive integer or is determined according to k or is determined according to the information sequence.

7. The method of claim 1, wherein a width of a pulse in the signal satisfies at least one of the following:

the width of the pulse in the signal is determined by a basic pulse width;
the width of the pulse in the signal is determined by the information sequence;
the width of the pulse in the signal is determined by the signal length of the signal;
the width of the pulse in the signal is determined by the signal length of the signal and a scale factor, wherein the scale factor is a positive real number less than 1 and is determined by the information sequence;
a width of at least one of an i-th high-level pulse or an n-th low-level pulse in the signal is determined by a value of a j-th bit in the information sequence, wherein $0 \leq i < M$, $0 \leq n < N$, $0 \leq j < k$, i is a function of j, and n is a function of j; or
a width of a 0-th high-level pulse and a width of an (M - 1)-th high-level pulse in the signal are determined by a maximum pulse width;
wherein M denotes a number of high-level pulses, and N denotes a number of low-level pulses.

8. The method of claim 1, wherein

a value of a width of a high-level pulse in the signal or a value of a width of a low-level pulse in the signal is taken from a first preset set, wherein
the first preset set comprises at least two unequal elements, and all elements in the first preset set are less than a maximum pulse width.

9. The method of claim 7, wherein

the scale factor is taken from a second preset set, wherein the second preset set comprises at least two unequal elements, and each element in the second preset set is a positive real number less than 1.

10. The method of claim 1, wherein the signal comprises P unit pulses, wherein

P is an integer multiple of k; and
a width of each of the P unit pulses is determined by at least one of the following parameters: a preset width, a basic pulse width, or a parameter configured using signaling.

11. The method of claim 10, wherein each of the P unit pulses is a unit high-level pulse or a unit low-level pulse and is determined by the information sequence.

12. The method of claim 1, wherein the information sequence is obtained from mapping of a k1-bit sequence, wherein k1 is a positive integer less than k.

13. The method of claim 12, wherein a mapping relationship between the information sequence and the k1-bit sequence satisfies at least one of the following mapping modes:

mapping the k1-bit sequence to the k-bit information sequence according to a preset mapping sequence;
mapping the k1-bit sequence to the information sequence according to a preset encoding rule; or
dividing the k1-bit sequence into a plurality of groups and mapping each of the plurality of groups according to a preset mapping sequence or a preset encoding rule, wherein a total length of mapped sequences in the plurality of groups is k bits, and the plurality of groups use a same preset mapping sequence or encoding rule or use different preset mapping sequences or encoding rules.

14. The method of claim 13, wherein the mapping relationship between the information sequence and the k1-bit sequence satisfies multiple superpositions of at least one of the mapping modes.

15. The method of claim 1, wherein the information sequence is mapped to a k2-bit sequence, and the signal is constructed based on the k2-bit sequence and is composed of the high-level pulse and the low-level pulse, wherein k2 is a positive integer greater than k.

16. The method of claim 15, wherein a mapping relationship between the information sequence and the k2-bit sequence satisfies at least one of the following mapping modes:

mapping the k-bit information sequence to the k2-bit sequence according to a preset mapping sequence;
mapping the k-bit information sequence to the k2-bit sequence according to a preset encoding rule; or
dividing the k-bit sequence into a plurality of groups and mapping each of the plurality of groups according to a preset mapping sequence or a preset encoding rule, wherein a total length of mapped sequences in the plurality of groups is k2 bits, and the plurality of groups use a same preset mapping sequence or encoding rule or use different preset mapping sequences or encoding rules.

17. The method of claim 16, wherein the mapping relationship between the information sequence and the k2-bit sequence satisfies multiple superpositions of at least one of the mapping modes.

18. The method of claim 14 or 17, wherein for the multiple superpositions, different superpositions use different mapping modes or use a same mapping mode but different mapping sequences, different encoding rules, or different grouped mappings.

19. An information receiving method, comprising:

receiving a signal carrying an information sequence;
determining a signal length of the signal, wherein the signal represents a k-bit information sequence, k is an integer greater than or equal to 2, and k is a preset value or a value configured using signaling; and
determining the information sequence carried by the signal according to a correspondence between the signal length of the signal, different pulse combination modes, and different k-bit information sequences.

20. The method of claim 19, wherein the correspondence between the signal length of the signal, different pulse combination modes, and different k-bit information sequences comprises at least one of the following:

different signal lengths correspond to different k-bit information sequences;

different pulse width combinations of at least one of a high-level pulse or a low-level pulse in the signal correspond to different combinations of the k-bit information sequence;

the information sequence corresponds to $2^k$ sequence states divided into a plurality of groups, different signal lengths correspond to different groups among the plurality of groups, and different pulse width combinations of at least one of a high-level pulse or a low-level pulse in the signal having a same length correspond to information sequences corresponding to different sequence states in a same group among the plurality of groups;

different pulse widths of at least one of a high-level pulse or a low-level pulse in the signal correspond to different bit values;

different pulse width ratios between two consecutive high-level pulses in the signal correspond to different bit values;

different pulse width ratios between two consecutive low-level pulses in the signal correspond to different bit values;

different pulse width ratios between two consecutive pulses consisting of one high-level pulse and one low-level pulse in the signal correspond to different bit values; or

different unit pulse combinations of the signal correspond to different combinations of the information sequence.

21. The method of claim 20, wherein

the information sequence corresponds to $2^k$ sequence states divided into $2^m$ groups, and each group among the $2^m$ groups comprises $2^{k-m}$ sequence states, wherein different signal lengths correspond to different groups of information sequences, that is, correspond to different values of m bits in the information sequence, and different pulse width combinations of at least one of the high-level pulse or the low-level pulse in the signal having the same signal length correspond to information sequences corresponding to different sequence states in a same group among the $2^m$ groups, that is, correspond to different values of remaining (k - m) bits in the information sequence, wherein m is a positive integer less than k.

22. The method of claim 19, wherein the information sequence is obtained from mapping of a bit sequence according to a mapping relationship that satisfies at least one of the following mapping modes:

a preset mapping sequence;

a preset encoding rule;

a preset grouped mapping, wherein the information sequence is divided into a plurality of groups, and the plurality of groups use a same preset mapping sequence or encoding rule or use different preset mapping sequences or encoding rules; or

one of the following mapping modes:

multiple superpositions of a preset mapping sequence, wherein different superpositions use different mapping sequences; or

multiple superpositions of a preset encoding rule, wherein different superpositions use different encoding rules; or

multiple superpositions of a preset grouped mapping, wherein different superpositions use different grouped mappings; or

multiple superpositions of a preset mapping sequence and a preset encoding rule, wherein different superpositions use different mapping sequences and different encoding rules; or

multiple superpositions of a preset mapping sequence and a preset grouped mapping, wherein different superpositions use different mapping sequences and different grouped mappings; or

multiple superpositions of a preset encoding rule and a preset grouped mapping, wherein different superpositions use different encoding rules and different grouped mappings; or

multiple superpositions of a preset mapping sequence, a preset encoding rule, and a preset grouped mapping, wherein different superpositions use different mapping sequences, different encoding rules, and different grouped mappings.

23. A transmission node, comprising a memory and at least one processor, wherein

the memory is configured to store at least one program; and

when executed by the at least one processor, the at least one program causes the at least one processor to perform the information sending method of any one of claims 1 to 18 or the information receiving method of any one of claims 19 to 22.

24. A computer-readable storage medium storing a computer program which, when executed by a processor, causes the processor to perform the information sending method of any one of claims 1 to 18 or the information receiving method of any one of claims 19 to 22.

**FIG. 1**

| Determine the signal length of the signal, where the signal represents a k-bit information sequence, k is an integer greater than or equal to 2, and k is a preset value or a value configured using signaling | 110 |

↓

| Determine the signal, where the signal includes a high-level pulse and a low-level pulse, and different pulse combination modes of the signal correspond to different k-bit information sequences | 120 |

↓

| Transmit the signal carrying the information sequence | 130 |

**FIG. 2**

| Receive a signal carrying an information sequence | 210 |

↓

| Determine the signal length of the signal, where the signal represents a k-bit information sequence, k is an integer greater than or equal to 2, and k is a preset value or a value configured using signaling | 220 |

↓

| Determine the information sequence carried by the signal according to a correspondence between the signal length of the signal, different pulse combination modes, and different k-bit information sequences | 230 |

**FIG. 3**

FIG. 4

FIG. 5

FIG. 6

**FIG. 7**

**FIG. 8**

**FIG. 9**

**FIG. 10**

**FIG. 11**

**FIG. 12**

**FIG. 13**

**FIG. 14**

**FIG. 15**

00 :

01 :

10 :

11 :

**FIG. 16**

00 :

01 :

10 :

11 :

**FIG. 17**

310

320

330

| Length determination module | Signal determination module | Sending module |

**FIG. 18**

410  420  430

| Receiving module | — | Length determination module | — | Sequence determination module |

**FIG. 19**

Memory 520

Communication apparatus 530

Processor 510

Input apparatus 540

Output apparatus 550

**FIG. 20**

## INTERNATIONAL SEARCH REPORT

<table>
<tr><td colspan="2">International application No.</td></tr>
<tr><td colspan="2">PCT/CN2024/083968</td></tr>
</table>

**A. CLASSIFICATION OF SUBJECT MATTER**

H04L25/49(2006.01)i; H04B10/524(2013.01)i

According to International Patent Classification (IPC) or to both national classification and IPC

**B. FIELDS SEARCHED**

Minimum documentation searched (classification system followed by classification symbols)

IPC: H04L H04B H04W H03M

Documentation searched other than minimum documentation to the extent that such documents are included in the fields searched

Electronic data base consulted during the international search (name of data base and, where practicable, search terms used)

VEN, VCN, CNKI, DWPI: 脉冲, 组合, 信号, PIE, 射频识别, RFID, 高电平, 低电平, 00 , 0000, 2比特, 4比特, 编码, 序列, pulse, combination, signal, high, low, 2 bits, 4 bits, code, sequence

**C. DOCUMENTS CONSIDERED TO BE RELEVANT**

| Category* | Citation of document, with indication, where appropriate, of the relevant passages | Relevant to claim No. |
|---|---|---|
| X | CN 102006080 A (NATIONAL UNIVERSITY OF DEFENSE TECHNOLOGY OF PLA) 06 April 2011 (2011-04-06)<br>description, paragraphs 8-27 | 1-24 |
| A | CN 101406014 A (ISHIDA CO., LTD.) 08 April 2009 (2009-04-08)<br>entire document | 1-24 |
| A | US 2022173949 A1 (NTT DOCOMO, INC.) 02 June 2022 (2022-06-02)<br>entire document | 1-24 |
| A | WO 2022206503 A1 (HUAWEI TECHNOLOGIES CO., LTD.) 06 October 2022 (2022-10-06)<br>entire document | 1-24 |
| A | WO 2023066112 A1 (VIVO MOBILE COMMUNICATION CO., LTD.) 27 April 2023 (2023-04-27)<br>entire document | 1-24 |

☐ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **09 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083968**

| Patent document cited in search report | | | Publication date (day/month/year) | Patent family member(s) | | | Publication date (day/month/year) |
|---|---|---|---|---|---|---|---|
| CN | 102006080 | A | 06 April 2011 | None | | | |
| CN | 101406014 | A | 08 April 2009 | JP | 2008103898 | A | 01 May 2008 |
| | | | | JP | 4540652 | B2 | 08 September 2010 |
| | | | | WO | 2008050569 | A1 | 02 May 2008 |
| | | | | JP | 2008148227 | A | 26 June 2008 |
| | | | | US | 2009041098 | A1 | 12 February 2009 |
| | | | | EP | 2053815 | A1 | 29 April 2009 |
| | | | | US | 2010166432 | A1 | 01 July 2010 |
| US | 2022173949 | A1 | 02 June 2022 | WO | 2020227866 | A1 | 19 November 2020 |
| | | | | CN | 113853772 | A | 28 December 2021 |
| WO | 2022206503 | A1 | 06 October 2022 | CN | 115189860 | A | 14 October 2022 |
| WO | 2023066112 | A1 | 27 April 2023 | CN | 115996092 | A | 21 April 2023 |

Form PCT/ISA/210 (patent family annex) (July 2022)